# EUROPEAN PATENT APPLICATION

(11) **EP 4 779 458 A1**
(43) Date of publication of application: **22.07.2026**
(21) Application number: 25205522.3
(22) Date of filing: 30.09.2025
(51) Int. Cl.: G06F 7/544, G06F 7/58

(54) **METHOD AND SYSTEM FOR ALLOCATING RESOURCES OF A SET OF RESOURCES TO ALLOCATIONS OF A SET OF ALLOCATIONS**

(30) Priority: 17.01.2025 EP 25152579
(71) Applicant: ScenarioX SA, 1204 Genève (CH)
(72) Inventor: DRI, Emanuele, 10141 Torino (IT); EXPOSITO, Ivan Diego, 1216 Cointrin (CH); KUASSIVI, Ahlin Situ Cédric, 1213 Petit Lancy (CH); XAVIER, Lionel, S398084 Singapour (SG); YOMI KWANDJEU, Achille, 1255 Veyrier (CH)
(74) Representative: Hautier IP

(57) **Abstract**

This invention provides a computer-implemented method (100) for resource allocation, leveraging both classical and quantum computing. The method (100) formulates (101) a Quadratic Unconstrained Binary Optimization problem to define resource selection and weight allocation based on historical performance data and a target performance value. An iterative process (102) utilizes a quantum random number generation module to simulate system evolution and estimate risk level. The quantum random number generation module generates random numbers via quantum processes, which are then used to simulate system trajectories and determine a risk threshold. Resource allocation (103) is then performed based on the optimized weights distribution, dynamically adjusting to achieve a desired risk level.

## Description

### INTRODUCTION

The present invention relates to the technical field of resource allocation, in particular in quantum optimization of resource allocation.

### BACKGROUND

Resource allocation is a real challenge in various fields, including logistics, telecommunications, and computing. Traditional methods for resource allocation often rely on heuristic approaches or deterministic algorithms that may not effectively account for the inherent uncertainties and variabilities in performance outcomes.

Prior art solutions typically employ linear programming or greedy algorithms to allocate resources among predefined allocations. These methods often assume static conditions and do not adapt to changing performance metrics or risk levels. For instance, some approaches utilize historical performance data to inform allocation decisions; however, they may fail to dynamically adjust allocations in response to real-time performance feedback.

Moreover, existing techniques often struggle with the complexity of multidimensional optimization problems, particularly when dealing with large sets of resources and allocations. As a result, there remains a need for a more robust and adaptable method that can dynamically allocate resources while considering both historical performance data and real-time risk assessments.

In light of these disadvantages, it is, therefore, an objective of the present invention to partially overcome the aforementioned challenges by proposing a novel approach that addresses the inefficiencies and impracticalities associated with the prior art solutions.

### SUMMARY

The present invention has been designed to overcome at least some drawbacks present in prior art solutions.

According to an aspect, the present invention relates to a computer-implemented method for, preferably dynamically, allocating resources of a set of resources to allocations of a set of allocations according to an expected risk level value R, the method being configured to be implemented by at least one computing system, the method comprising:
- A formulation phase:
   ∘ Formulating, using at least one classical processing unit, a Quadratic Unconstrained Binary Optimization problem for resource selection among the set of resources and weight allocation among the set of allocations the set of resources and the set of allocations defining a system, the Quadratic Unconstrained Binary Optimizationproblem being formulated as: *min*(*w^{T}*Σ*w* - *λ*(*r^{T}w* - *r**)*),* where:
      - *r** = a target performance value
      - *w* = resource weights;
      - *Σ* = covariance matrix of performance of allocations of a set of allocations using historical performance data.
      - *λ* = trade-off parameter between the variance of the performance of allocations and the target performance value *r**.
      - *rTw* = expected allocations performance using the historical performance data.
- An iterative phase configured to be repeated until an expected risk level value R is comprised between the target expected risk level value r* minus a tolerance value and the target expected risk level value r* plus the tolerance value, the iterative phase comprising:
   ∘Calculating a solution by solving, using at least one quantum processing unit, the Quadratic Unconstrained Binary Optimizationproblem for an initial target performance value ri*;
   ∘Extracting, using the classical processing unit, the optimal resource weights distribution among the set of allocations based on the initial target performance value ri* from the calculated solution to get starting initial conditions for the estimation of the expected risk level value R;
   ∘Estimating the expected risk level value R by:
      • Setting, using the classical processing unit, starting conditions of at least one system, the system comprising the set of allocations and the resource weight distribution among the allocations resulting from the calculated solution;
      ▪ Acquiring at least one set of quantum-generated random numbers, using the communication module, by at least:
         • Generating, using the classical processing unit and at least one quantum random number generation module, a plurality of quantum-generated random numbers, by at least:
            ∘ Initiating at least one quantum process using the classical processing unit and the quantum random number generation module, said quantum random number generation module comprising at least one output configured to provide a stream of random data generated by the quantum process;
            ∘ Measuring at least one stream of random data from said output of this quantum random number generation module using a measurement module;
            ∘ Post-processing, using the classical processing unit, the stream of random data to convert the stream of random data into plurality of quantum-generated random numbers;
            ∘Storing the quantum-generated random numbers in at least one storing module;
         • Selecting, using the classical processing unit, the set of quantum-generated random numbers;
      ▪ Simulating, using the classical processing unit and the set of quantum-generated random numbers, the time evolution of the initial configuration of the system to obtain at least one plurality of final configurations of the system, the simulating step comprising at least:
         • Partitioning the set of quantum-generated random numbers into a first predetermined number of subsets of quantum-generated random numbers, each subset of the predetermined number of subsets of quantum-generated random numbers comprising a second predetermined number of quantum-generated random numbers, the first predetermined number being based on a first criterion related to parameters of the simulating step, the second predetermined number being based on a second criterion related to the nature of the system;
         • For each subset of the predetermined number of subsets of quantum-generated random numbers, creating at least one trajectory of the evolution of the configuration of the system from its initial configuration to at least one final configuration over a given timeframe;
      ▪ Obtaining, using the classical processing unit, a distribution of a plurality of final configurations according to at least one first axis by organizing the plurality of final configurations based on predetermined rules, said distribution defining a global manifold of n dimensions, n being equal or greater than 1;
      ▪ Determining, using the classical processing unit, at least one threshold value among the plurality of final configurations, said threshold value delimiting a first set of final configurations from a second set of final configurations, the determining step comprising:
         • Setting a given criterion;
         • Calculating a first manifold of n+1 dimension based on said given criterion under the manifold of n dimension, said first manifold corresponding to said first set of final configurations, said first manifold being a part of a global manifold of n+1 dimensions;
         • Defining another manifold of n dimension configured to separate the first manifold of n+1 dimension from a second manifold of n+1 dimensions, the global manifold of n+1 dimensions being formed by at least the first manifold of n+1 dimension and the second manifold of n+1 dimensions;
         • Computing the at least one threshold value on at least the first axis, this threshold value corresponding to at least one intersection of the first axis with the another manifold of n dimensions.
      ▪ Computing, using the classical processing unit, the expected risk level value as being the average of final configurations beyond the determined threshold value;
      ▪ Checking, using the classical processing unit:
         - If the expected risk level value R is comprised between the target expected risk level value r* minus the tolerance value and the target expected risk level value r* plus the tolerance value, the calculated solution is valid.
         - If the expected risk level value is higher than the expected risk level value r* plus the tolerance value:
            ∘ adjusting the target performance value r* downward using an adjustment step; and
            ∘ repeating the iterative phase until the calculated solution is valid;
         - If the expected risk level value is lower than the expected risk level value r* minus the tolerance value:
            ∘ adjusting the target performance value r* upward using an adjustment step; and
            ∘ repeating the iterative phase until the calculated solution is valid;
- An allocation phase comprising:
   ∘Allocating, using the classical processing unit, the resources of the set of resources based on the extracted optimal resource weights distribution among the set of allocations.

According to another aspect, the present invention relates to a computing system for allocating resources based on expected risk level, the computing system being configured to implement the method according to the present invention.

According to another aspect, the present invention relates to a computing system for allocating resources based on expected risk level, the computing system being configured to implement the method according to the present invention, the computing system comprising:
• At least one classical processing unit configured to:
   - Formulate a Quadratic Unconstrained Binary Optimization problem for resource selection from a set of resources and weight allocation among a set of allocations;
   - Extract optimal resource weights distribution among the set of allocations based on an initial target performance value from a solution to the Quadratic Unconstrained Binary Optimizationproblem, thereby generating starting conditions for estimating an expected risk level value R.
   - Set starting conditions of at least one system comprising the set of allocations and the resource weight distribution resulting from the calculated solution.
   - Post-process streams of random data generated by a Quantum Random Number Generation Module to convert said stream into a plurality of quantum-generated random numbers.
   - Partition a set of quantum-generated random numbers into a first predetermined number of subsets, each subset comprising a second predetermined number of quantum-generated random numbers, the first and second predetermined numbers being based on criteria related to simulation parameters and system characteristics respectively.
   - Simulate time evolution of an initial configuration of the system using the set of quantum-generated random numbers to obtain a plurality of final configurations. The simulation includes creating at least one trajectory for each subset of quantum-generated random numbers, evolving the system from its initial configuration to at least one final configuration over a given timeframe.
   - Organize the plurality of final configurations based on predetermined rules to obtain a distribution defining a global manifold of n dimensions, where n ≥ 1.
   - Determine at least one threshold value among the plurality of final configurations by:
      - Setting a given criterion;
      - Calculating a first manifold of n+1 dimension based on said given criterion under the manifold of n dimension, said first manifold corresponding to a first set of final configurations;
      - Defining another manifold of n dimension configured to separate the first manifold of n+1 dimension from a second manifold of n+1 dimensions, the global manifold of n+1 dimensions being formed by at least the first manifold of n+1 dimension and the second manifold of n+1 dimensions;
      - Computing the at least one threshold value on at least the first axis, this threshold value corresponding to at least one intersection of the first axis with the another manifold of n dimensions.
   - Compute the expected risk level value R as the average of final configurations beyond the determined threshold value.
   - Compare the expected risk level value R to a target expected risk level value and a tolerance value, and:
      - **If** the expected risk level value R is comprised between the target expected risk level value r* minus the tolerance value and the target expected risk level value r* plus the tolerance value, the calculated solution is valid.
      - **If** the expected risk level value is higher than the expected risk level value r* plus the tolerance value:
         - adjust the target performance value r* downward using an adjustment step; and
         - repeat the iterative phase until the calculated solution is valid;
      - If the expected risk level value is lower than the expected risk level value r* minus the tolerance value:
         - adjust the target performance value r* upward using an adjustment step; and
         - repeat the iterative phase until the calculated solution is valid.
   - Allocate resources of the set of resources based on the extracted optimal resource weights distribution among the set of allocations upon a valid solution being achieved.
• At least one quantum processing unit configured to solve the QUBO problem for an initial target performance value.
• At least one quantum random number generation module comprising at least one output configured to provide a stream of random data generated by a quantum process.
• At least one measurement module coupled to the quantum random number generation module, configured to measure at least one stream of random data from said output.

According to another embodiment, the present invention relates to a computer product program for allocating resources based on expected risk level which, when executed by at least one computing system according to the present invention, executes the method according to the present invention.

According to another embodiment, the present invention relates to a non-transitory computer readable medium comprising at least one computer program product according to the present invention.

### BRIEF DESCRIPTION OF THE DRAWINGS

For a better understanding of the present invention, as well as other aspects and further features thereof, reference is made to the following description which is to be used in conjunction with the accompanying drawings, where:
FIG. 1 illustrates a high-level flowchart of a method 100 according to an embodiment of the present invention.
FIG. 2 illustrates a flowchart of a method 100 according to an embodiment of the present invention;
FIG. 3 illustrates a schematic representation of a specific embodiment of the presented invention;
FIG. 4 illustrates a distribution of final states according to an embodiment of the present invention;
FIG. 5 illustrates the step-by-step process of a Quantum Random Number Generator according to an embodiment of the present invention.

### DETAILED DESCRIPTION

Before providing below a detailed review of embodiments of the invention, some optional characteristics that may be used in association or alternatively will be listed hereinafter:
According to an example, the present invention further comprises, before the formulation phase, a definition phase configured to determine a set of parameters, the determination phase comprising:
∘ Defining, by at least one user using a communication module, the set of allocations;
∘ Defining, by the user using the communication module, the set of resources configured to be allocated to the set of allocations;
∘Compiling, using the classical processing unit, the historical performance data associated with each allocation in combination with previous allocated resources;
∘ Determining, using the classical processing unit, an initial allocation weight for each resource of the set of resources;
∘ Defining, by the user using the communication module, the initial target performance value r*;
∘ Defining, by the user using the communication module, the target expected risk level value;
∘Defining, by the user using the communication device, the adjustment step size;
∘Defining, by the user using the communication module, the tolerance value associated with the expected risk level value.

According to an example, the first user is taken among at least: a human, a robot, an artificial intelligence, an artificial intelligence agent.

According to an example, the definition phase further comprises defining, by the user using the communication device, a number of simulations.

According to an example, the iterative phase is stopped when the number of simulations is reached.

According to an example, the initial allocation weight for each resource of the set of resources is uniform or random.

According to an example, the resource weights is binary or continuous, depending on the solver.

According to an example, the present invention further comprises, when the resource weights is continuous, a step of converting the resource weights in binary.

According to an example, the quantum processing unit comprises a set of qubits or a set of quantum-inspired processing steps configured to solve the QUBO problem.

According to an example, n is equal to 1.

According to an example, the distribution of the plurality of final states defines a curve.

According to an example, the first manifold defines a surface under said curve.

According to an example. the another manifold defines a line.

According to an example, n is equal to 2.

According to an example, the distribution of the plurality of final states defines a surface.

According to an example, the first manifold defines a volume under said surface.

According to an example, the another manifold defines a surface.

According to an example, the step of simulating the time evolution of the initial state of the system comprises at least the following sub-steps:
• Defining at least a plurality of parameters by:
   o Setting at least an initial value S0 for at least one quantity being simulated;
   o Defining at least one growth rate r, preferably constant, configured to represent the expected tendency of change of the quantity being simulated over time;
   o Defining a volatility σ configured to represent the degree of fluctuation in the process;
   o Setting a time horizon T for the simulation;
   o Defining a number N of steps corresponding to the number of time intervals to calculate the simulation at regular intervals;
   o Selecting a number M of simulations corresponding to the number of independent paths to simulate;
   This plurality of parameters are configured to mathematically simulate the evolution of the quantity according to the following stochastic differential first equation: dSt = St * (r*dt + σ * dWt) where Wt represents random shocks through a Wiener process, and the following second equation: St+Δt = St * exp((r - 0.5σ2) Δt + σΔt1/2Z) configured to discretize the first equation to simulate changes over predetermined time intervals Δt, and where Z is a standard normal random variable, introducing randomness at each time step using the set of quantum-generated random number;
• Generating M Random Paths, each random path representing a unique possible outcome of the quantity's evolution, and for each generation of a random path:
   ∘ Starting from the initial value S0;
   ∘ Iterating over N time steps.
   ∘ At each step, generating a new random value Z using at least one quantum-generated random number form the set of quantum-generated random numbers,
   ∘ Applying the new random value Z to the second equation to calculate an updated value St;
   ∘ Recording the updated value St at each interval until reaching the end of the time horizon T.
• Calculating average values and/or other statistical measures across all random paths at predetermined points in time over the time horizon T.

According to an example, the present invention comprises:
• computing the average values and/or other statistical measures across all random paths at predetermined points in time over the time horizon T to generate at least one probability distribution and/or at least one plurality of probabilities, each probability of the plurality of probabilities corresponding to a specific scenario; and
• aggregating at least a plurality of results across the different random paths to obtain probabilistic data, said probabilistic data comprising at least one among: a mean, a median, a variance, or probability distributions over time.

According to an example, the quantum process comprises a transformation of at least one quantum state through a specific set of operations.

According to an example, the quantum process is taken among at least:
• Quantum coin flip process using at least one qubit;
• Quantum measurement process on an entangled qubit system.

According to an example, the step of setting initial conditions of the system comprises defining a set of key variables related to an initial state of the system, and attributing at least one value to each variable of the set of key variables.

According to an example, the quantum random number generation module comprises a plurality of qubits, the plurality of qubits comprising at least one of superconducting qubits or ions trapped qubits.

According to an example, the step of generating a plurality of quantum-generated random numbers comprises:
• Putting a set of qubits of the plurality of qubits into a uniform superposition state;
• Measuring the state of each qubit of the set of qubits using at least one measurement module, the state being measured as a binary value;
• Post-processing the measurements by converting the binary value into a decimal value using the classical information processing module;
• Repeating steps a to c until a predetermined number of quantum-generated random numbers is reached.

According to an example, the set of resources represents different products in an inventory system, and the set of allocations corresponds to different storage locations, time periods, or demand channels requiring inventory allocation, the method further comprising:
• configuring the weight vector w to represent inventory quantities for each product;
• configuring the covariance matrix Σ to capture historical demand variability and correlations between different products;
• setting the target performance value r* to represent a desired service level;
• modeling demand uncertainty through simulations using quantum-generated random numbers to simulate customer demand patterns and supply chain disruptions;
• calculating the expected risk level value R as a composite metric encompassing both stockout risk and excess inventory risk;
• determining threshold values that separate acceptable inventory levels from problematic outcomes considering lost sales costs for stockouts and carrying costs for excess inventory; and
• implementing dynamic reorder points and order quantities that adapt to changing risk profiles and demand patterns based on the calculated solution.

According to an example, the set of resources represents various power generation sources including renewable, traditional, and baseload generators, and the set of allocations corresponds to grid components including distribution nodes, transmission lines, and demand centers, the method further comprising:
• configuring the weight vector w to represent power allocation decisions from each generation source to various demand centers;
• configuring the covariance matrix Σ to capture historical variability and correlations between different energy sources and demand patterns;
• setting the target performance value r* to represent desired metrics selected from renewable energy integration targets or maximum acceptable electricity costs;
• modeling grid variability through the Monte Carlo simulation using quantum-generated random numbers to simulate demand fluctuations, renewable generation variability, and equipment failures;
• calculating the expected risk level value R specifically focused on energy shortage scenarios that could lead to brownouts or blackouts;
• determining threshold values that establish critical reserve margins and identify grid configurations maintaining acceptable shortage probabilities; and
• implementing dynamic resource allocation that shifts between stable baseload sources and renewable sources based on calculated risk levels to optimize grid stability while meeting sustainability objectives.

According to an example, the set of resources represents molecular features, functional groups, and structural components for drug candidates, and the set of allocations corresponds to different positions within molecular scaffolds, binding sites, or pharmacophores, the method further comprising:
• configuring the weight vector w to represent binary decisions about including specific functional groups, chemical moieties, or structural elements in molecular design;
• configuring the covariance matrix Σ to capture historical relationships between molecular features and their combined effects on efficacy and toxicity;
• setting the target performance value r* to represent desired therapeutic metrics selected from binding affinity, bioavailability, or therapeutic index;
• modeling biological response variability through the Monte Carlo simulation using quantum-generated random numbers to simulate inter-patient variability in drug response and genetic polymorphisms;
• calculating the expected risk level value R encompassing both toxicity risks across multiple endpoints and inefficacy probabilities;
• determining threshold values that establish acceptable risk levels based on therapeutic area requirements; and
• implementing molecular modification strategies that identify and modify problematic molecular features when risk exceeds thresholds or enhance potency when risk levels are below targets while maintaining chemical feasibility constraints.

According to an example, the set of resources represents emergency response units including ambulances, fire trucks, search and rescue teams, and medical personnel, and the set of allocations corresponds to geographical deployment locations, staging areas, hospitals, and incident sites, the method further comprising:
• configuring the weight vector w to represent deployment decisions for each resource type to various emergency response locations;
• configuring the covariance matrix Σ to capture historical data on incident patterns, response times, and resource utilization correlations;
• setting the target performance value r* to represent emergency response metrics selected from population coverage targets or critical infrastructure protection requirements;
• modeling disaster uncertainty through the Monte Carlo simulation using quantum-generated random numbers to simulate incident locations, severity levels, cascade effects, and infrastructure failures;
• calculating the expected risk level value R of unmet emergency demand encompassing delayed response scenarios and insufficient resource availability;
• determining threshold values that establish critical service levels below which unacceptable loss of life or property damage occurs; and
• implementing intelligent resource shifting strategies that redirect resources from lower-risk areas to high-probability demand areas or redistribute resources to provide comprehensive coverage based on evolving disaster conditions and real-time incident data.

According to an example, n is equal to 1, and the distribution of the plurality of final states defines a curve and the first manifold defines a surface under said curve, and the another manifold defines a line.

According to an example, n is equal to 2, and the distribution of the plurality of final states defines a surface and the first manifold defines a volume under said surface, and the another manifold defines a surface.

According to an example, the step of simulating the time evolution of the initial state of the system comprises at least the following sub-steps:
a. Defining at least a plurality of parameters by:
   i. Setting at least an initial value S0 for at least one quantity being simulated;
   ii. Defining at least one growth rate g, preferably constant, configured to represent the expected tendency of change of the quantity being simulated over time;
   iii. Defining a volatility σ configured to represent the degree of fluctuation in the process;
   iv. Setting a time horizon T for the simulation;
   v. Defining a number N of steps corresponding to the number of time intervals to calculate the simulation at regular intervals;
   vi. Selecting a number M of simulations corresponding to the number of independent paths to simulate;
   This plurality of parameters are configured to mathematically simulate the evolution of the quantity according to the following stochastic differential first equation: dSt = St * (r*dt + *σ* * dWt) where Wt represents random shocks through a Wiener process, and the following second equation: St+Δt = St * exp((r - 0.5*σ*2) Δt + σΔt1/2Z) configured to discretize the first equation to simulate changes over predetermined time intervals Δt, and where Z is a standard normal random variable, introducing randomness at each time step using the set of quantum-generated random number;
b. Generating M Random Paths, each random path representing a unique possible outcome of the quantity's evolution, and for each generation of a random path:
   i. Starting from the initial value S0;
   ii. Iterating over N time steps.
   iii. At each step, generating a new random value Z using at least one quantum-generated random number form the set of quantum-generated random numbers,
   iv. Applying the new random value Z to the second equation to calculate an updated value St;
c. Recording the updated value St at each interval until reaching the end of the time horizon T.
d. Calculating average values and/or other statistical measures across all random paths at predetermined points in time over the time horizon T.

According to an example, the present invention comprises:
a. computing the average values and/or other statistical measures across all random paths at predetermined points in time over the time horizon T to generate at least one probability distribution and/or at least one plurality of probabilities, each probability of the plurality of probabilities corresponding to a specific scenario; and
b. aggregating at least a plurality of results across the different random paths to obtain probabilistic data, said probabilistic data comprising at least one among: a mean, a median, a variance, or probability distributions over time.

According to an example, the quantum process comprises a transformation of at least one quantum state through a specific set of operations, and the quantum process is taken among at least:
a. Quantum coin flip process using at least one qubit;
b. Quantum measurement process on an entangled qubit system.

According to an example, the quantum process comprises a transformation of at least one quantum state through a specific set of operations.

According to an example, the quantum process is taken among at least:
a. Quantum coin flip process using at least one qubit;
b. Quantum measurement process on an entangled qubit system.

According to an example, the step of setting initial conditions of the system comprises defining a set of key variables related to an initial state of the system, and attributing at least one value to each variable of the set of key variables.

According to an example, the step of setting initial conditions of the system comprises defining a set of key variables related to an initial state of the system.

According to an example, after defining the set of key variables, the step of setting initial conditions of the system comprises attributing at least one value to each variable of the set of key variables.

According to an example, the quantum random number generation module comprises a plurality of qubits, the plurality of qubits comprising at least one of superconducting qubits or ions trapped qubits, and the step of generating a plurality of quantum-generated random numbers comprises:
a. Putting a set of qubits of the plurality of qubits into a uniform superposition state;
b. Measuring the state of each qubit of the set of qubits using at least one measurement module, the state being measured as a binary value;
c. Post-processing the measurements by converting the binary value into a decimal value using the classical information processing module;
d. Repeating steps a to c until a predetermined number of quantum-generated random numbers is reached.

According to an example, the quantum random number generation module comprises a plurality of qubits.

According to an example, the plurality of qubits comprises at least one of superconducting qubits or ions trapped qubits.

According to an example, the step of generating a plurality of quantum-generated random numbers comprises:
a. Putting a set of qubits of the plurality of qubits into a uniform superposition state;
b. Measuring the state of each qubit of the set of qubits using at least one measurement module, the state being measured as a binary value;
c. Post-processing the measurements by converting the binary value into a decimal value using the classical information processing module;
d. Repeating steps a to c until a predetermined number of quantum-generated random numbers is reached.

According to an example, the step of putting the set of qubits of the plurality of qubits into a uniform superposition state comprises using a set of Hadamard gates.

According to an example, the measurement module comprises at least one pulse emitter and at least one detector.

According to an example, the step of simulating the time evolution of the initial state of the system comprises using at least one of Monte Carlo and/or Geometric Brownian Motion approaches.

According to an example, the present invention further comprises using of a Markov Chain Monte Carlo (MCMC) approach for simulating the time evolution of the initial state of the system.

According to an example, the predetermined rules comprise ordering the final states based on their values.

According to an example, the step of simulating the time evolution of the initial state of the portfolio to obtain a plurality of final states of the portfolio comprises at least the following sub-steps:
a. Defining at least a plurality of parameters by:
b. Setting at least an initial price S0 for at least one asset being simulated;
c. Defining at least one risk free rate r, preferably constant, configured to represent the opportunity cost of holding a risk-free asset ;
d. Defining a volatility σ of the asset configured to represent the degree of price fluctuation;
e. Setting a time horizon T for the simulation;
f. Defining a number N of steps corresponding to the number of time intervals to calculate the simulation at regular intervals;
g. Selecting a number M of simulations corresponding to the number of independent paths to simulate; This plurality of parameters is configured to mathematically simulate the evolution of the price of the asset according to the following stochastic differential first equation: dSt = St * (r*dt + *σ* * dWt) where Wt represents random shocks through a Wiener process, and the following second equation: St+Δt = St * exp((r - 0.5σ2) Δt + σΔt1/2Z) configured to discretize the first equation to simulate changes over predetermined time intervals Δt, and where Z is a standard normal random variable, introducing randomness at each time step using the set of quantum-generated random number;
h. Generating M Random Paths, each random path representing a unique possible outcome of the price's evolution, and for each generation of a random path:
   i. Starting from the initial price S0;
   ii. Iterating over N time steps.
   iii. At each step, generating a new random value Z using at least one quantum-generated random number from the set of quantum-generated random numbers,
   iv. Applying the new random value Z to the second equation to calculate an updated price St;
   v. Recording the updated price St at each interval until reaching the end of the time horizon T.
i. Calculating average values and/or other statistical measures across all random paths at predetermined points in time over the time horizon T.

According to an example, the present invention further comprises aggregating at least a plurality of results across the different random paths to obtain probabilistic data, said probabilistic data comprising at least one among: an average final price, a variance, or probabilities of certain price thresholds.

In the context of the present invention, "manifold of n dimensions" may refer to a topological space of n dimensions that is locally Euclidean. More specifically, each point in a manifold has a neighborhood that is homeomorphic to an open set in Euclidean space. This property allows for the use of techniques from Euclidean geometry and calculus when analyzing manifolds. The dimension of a manifold is the number of coordinates required to specify a point within it, which can be any integer greater than or equal to zero.

In the context of the present specification, a "server" is a computer program that is running on appropriate hardware and is capable of receiving requests (e.g., from devices) over a network, and carrying out those requests, or causing those requests to be carried out. The hardware may be one physical computer or one physical computer system, but neither is required to be the case with respect to the present invention. **In** the present context, the use of the expression a "server" is not intended to mean that every task (e.g., received instructions or requests) or any particular task will have been received, carried out, or caused to be carried out, by the same server (i.e., the same software and/or hardware); it is intended to mean that any number of software elements or hardware devices may be involved in receiving/sending, carrying out or causing to be carried out any task or request, or the consequences of any task or request; and all of this software and hardware may be one server or multiple servers, both of which are included within the expression "at least one server".

In the context of the present specification, the words "first", "second", "third", etc. have been used as adjectives only for the purpose of allowing for distinction between the nouns that they modify from one another, and not for the purpose of describing any particular relationship between those nouns. Thus, for example, it should be understood that, the use of the terms "first module" and "third module" is not intended to imply any particular order, type, chronology, hierarchy or ranking (for example) of/between the modules, nor is their use (by itself) intended imply that any "second module" must necessarily exist in any given situation. Further, as is discussed herein in other contexts, reference to a "first" element and a "second" element does not preclude the two elements from being the same actual real-world element. Thus, for example, in some instances, a "first" module and a "second" module may be the same software and/or hardware, in other cases they may be different software and/or hardware.

In the context of the present specification, a "database" is any structured collection of data, irrespective of its particular structure, the database management software, or the computer hardware on which the data is stored, implemented or otherwise rendered available for use. A database may reside on the same hardware as the process that stores or makes use of the information stored in the database or it may reside on separate hardware, such as a dedicated server or plurality of servers. It can be said that a database is a logically ordered collection of structured data kept electronically in a computer system

In the context of the present specification, the expression "information" includes information of any nature or kind whatsoever capable of being stored in a database. Thus information includes, but is not limited to audiovisual works (images, movies, sound records, presentations etc.), data (location data, numerical data, etc.), text (opinions, comments, questions, messages, etc.), documents, spreadsheets, lists of words, etc.

In the context of the present specification, the expression "component" or "module" is meant to include software (appropriate to a particular hardware context) that is both necessary and sufficient to achieve the specific function(s) being referenced.

In the context of the present specification, the expression "computer usable information storage medium" is intended to include media of any nature and kind whatsoever, including RAM, ROM, disks (CD-ROMs, DVDs, floppy disks, hard drivers, etc.), USB keys, solid state-drives, tape drives, etc.

The functions of the various elements shown in the figures, including any functional block labeled as a "processor" or a "processing module" or a "processing unit", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. In some embodiments of the present invention, the processor may be a general purpose processor, such as a central processing unit (CPU), also called a classical processing unit, or a processor dedicated to a specific purpose, such as a digital signal processor (DSP). Moreover, explicit use of the term a "processor" should not be construed to refer exclusively to hardware capable of executing software, and may implicitly include, without limitation, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown. Moreover, it should be understood that module may include for example, but without being limitative, computer program logic, computer program instructions, software, stack, firmware, hardware circuitry or a combination thereof which provides the required capabilities. Implementations of the present invention each have at least one of the above-mentioned object and/or aspects, but do not necessarily have all of them. It should be understood that some aspects of the present invention that have resulted from attempting to attain the above-mentioned object may not satisfy this object and/or may satisfy other objects not specifically recited herein.

In the present description, the words "data", "piece of information" and "information" can be used for the same purpose, i.e. one data can be or comprise information or a piece of information, and a piece of information can be or comprise data.

In the present description, one module can comprise several modules, one module can be formed of several modules. For example, the quantum channel module can comprise several other modules and quantum channels.

According to an embodiment, the present invention can be configured to cooperate with at least one input module including one or more user interface devices such as a keyboard, pointer, number pad, or touch screen.

According to an embodiment, the classical information processing module comprises at least one processor. In the present description, a processor may be any logic processing unit, such as one or more digital processors, microprocessors, central processing units, graphics processing units, application-specific integrated circuits, programmable gate arrays, programmed logic units, digital signal processors, network processors, and the like.

In the present description, a storage device is at least one non-transitory or tangible storage device. A storage device can, for example, include one or more volatile storage devices, for instance random access memory, and one or more non-volatile storage devices, for instance read only memory, flash memory, magnetic hard disk, optical disk, solid state disk, and the like.

In the present description, a storage device can include or store processor-executable instructions and/or processor-readable data associated with the operation of the present invention and/or with the execution of the method of the present invention. Execution of processor-executable instructions and/or data causes the at least one processor, and/or control modules or units, to carry out various processes and actions.

Classical data can include processor-executable instructions that, when executed by a processor, cause the processor to control, initialize, write to, manipulate, read out, and/or otherwise send data to/from a quantum module.

Classical data can include data used or obtained by the operation of the present invention. Classical data can include data associated with, e.g., created by, referred to, changed by, a processor executing processor-executable instructions, such as, control instructions.

Quantum data or quantum information can comprise one or more qubits. A qubit or quantum bit is a logical building block of a quantum computer comparable to a binary digit in a classical digital computer. A qubit conventionally is a defined physical system having two or more discrete states called computational states or basis states. Basis states logically are analogous to binary states. These states may be labeled |0> and |1>.

As well known by the skilled person in the relevant art (see for example "Quantum entanglement", Ryszard Horodecki et al., Rev. Mod. Phys. 81, 865), an entangled state corresponds to at least two systems, for example two particles, sharing one wave function, and where the determination of a property of one of the particles determines a property of the other particle.

Unless otherwise specified herein, or unless the context clearly dictates otherwise the term about modifying a numerical quantity means plus or minus ten percent. Unless otherwise specified, or unless the context dictates otherwise, between two numerical values is to be read as between and including the two numerical values.

In the present description, some specific details are included to provide an understanding of various disclosed implementations. The skilled person in the relevant art, however, will recognize that implementations may be practiced without one or more of these specific details, parts of a method, components, materials, etc. In some instances, well-known methods associated with artificial intelligence, machine learning and/or neural networks, have not been shown or described in detail to avoid unnecessarily obscuring descriptions of the disclosed implementations. **In** some instances, well-known structures associated with semiconductor and/or optical devices and/or quantum computing and/or quantum information processing, such as targets, substrates, lenses, waveguides, shields, filters, lasers, processor-executable instructions, have not been shown or described in detail to avoid unnecessarily obscuring descriptions of the disclosed implementations.

In the present description and appended claims "a", "an", "one", or "another" applied to "embodiment", "example", or "implementation" is used in the sense that a particular referent feature, structure, or characteristic described in connection with the embodiment, example, or implementation is included in at least one embodiment, example, or implementation. Thus, phrases like "in one embodiment", "in an embodiment", or "another embodiment" are not necessarily all referring to the same embodiment. Furthermore, the particular features, structures, or characteristics may be combined in any suitable manner in one or more embodiments, examples, or implementations.

As used in this description and the appended claims, the singular forms of articles, such as "a", "an", and "the", may include plural referents unless the context mandates otherwise. Unless the context requires otherwise, throughout this description and appended claims, the word "comprise" and variations thereof, such as, "comprises" and "comprising" are to be interpreted in an open, inclusive sense, that is, as "including, but not limited to".

Additional and/or alternative features, aspects and advantages of implementations of the present invention will become apparent from the following description, the accompanying drawings and the appended claims.

The examples and conditional language recited herein are principally intended to aid the reader in understanding the principles of the present invention and not to limit its scope to such specifically recited examples and conditions. It will be appreciated that those skilled in the art may devise various arrangements which, although not explicitly described or shown herein, nonetheless embody the principles of the present invention and are included within its spirit and scope.

Furthermore, as an aid to understanding, the following description may describe relatively simplified implementations of the present invention. As persons skilled in the art would understand, various implementations of the present invention may be of a greater complexity.

In some cases, what are believed to be helpful examples of modifications to the present invention may also be set forth. This is done merely as an aid to understanding, and, again, not to define the scope or set forth the bounds of the present invention. These modifications are not an exhaustive list, and a person skilled in the art may make other modifications while nonetheless remaining within the scope of the present invention. Further, where no examples of modifications have been set forth, it should not be interpreted that no modifications are possible and/or that what is described is the sole manner of implementing that element of the present invention.

Moreover, all statements herein reciting principles, aspects, and implementations of the present invention, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present invention. Similarly, it will be appreciated that any flowcharts, flow diagrams, state transition diagrams, pseudo-code, and the like represent various processes which may be substantially represented in computer-readable media and so executed by a computer or processor, whether or not such computer or processor is explicitly shown.

With these fundamentals in place, we will now consider some non-limiting examples to illustrate various implementations of aspects of the present invention.

According to an embodiment, the present invention relates to resource allocation, like for example, optimizing package allocation across a fleet of trucks or optimizing portfolio construction, preferably subject to risk-return objectives. The method can be configured to iteratively refine allocation strategies until a risk-adjusted optimal solution is achieved. Convergence may be determined by evaluating expected shortfall against a predefined epsilon threshold. The optimization process can utilize solvers, potentially requiring binary inputs, and incorporates penalty terms to manage constraints. Scaling the objective function can ensure penalty terms do not dominate, mitigating the risk of local minima. This approach facilitates efficient convergence and robust portfolio construction.

In specific embodiments, the method uses qubit systems to generate random data. Accordingly, the present invention can further encompass quantum processing units comprising qubits and/or quantum-inspired processing steps. These elements enable the execution of quantum algorithms using quantum hardware and/or mimic quantum computation using classical hardware. This provides a pathway for leveraging quantum principles to generate quantum random numbers.

As described hereafter, the present invention can be configured to formulate a QUBO problem for resource selection and weight allocation, utilizing quantum processes to simulate system evolution and optimize resource distribution in a manner that aligns with desired performance outcomes and risk thresholds.

According to an embodiment, the present invention is configured to use quantum-generated random numbers within a computational environment, preferably for solving simulating stochastic processes.

According to an embodiment, the present invention comprises a quantum random number generation module that generates a stream of random data via a quantum process. A measurement module may be coupled to the quantum random number generation module and may be configured to measure the generated random data. Preferably, a storage module can be configured to store the quantum-generated random numbers.

According to an embodiment, the present invention can be employed to solve optimization problems, such as those formulated as Quadratic Unconstrained Binary Optimization (QUBO) problems according to a specific risk level. The quantum-generated random numbers can be used to introduce randomness into simulations, for example, simulations of stochastic processes and/or as a convergence criterion within an optimization algorithm. This allows for the exploration of a wider range of possible outcomes and potentially leads to more robust and efficient solutions.

According to an embodiment, the present invention can simulate changes over predetermined time intervals by discretizing equations and introducing randomness at each time step. Multiple random paths, each representing a unique possible outcome, are advantageously generated using the quantum-generated random numbers. Statistical measures, such as average values, can be calculated across these paths to analyze a system's behavior over a defined time horizon.

According to an embodiment, the system may incorporate a D-Wave quantum annealer, utilizing either a Chimera or Pegasus topology, or even other kind of quantum computing system being able to solve a QUBO problem.

According to an embodiment, the present invention relates to a computer-implemented method and to a computing system for, preferably dynamically, allocating resources based on an expected risk level, leveraging a quantum processing unit and quantum-generated random numbers. The method aims to optimize resource allocation while managing risk within a defined system.

According to an embodiment, the present invention comprises a plurality of phases:
• Optionally, a definition phase;
• A formulation phase;
• An iterative phase; and
• An allocation phase.

According to an embodiment, the definition phase is configured to allow the definition of a plurality of parameters. This selection phase can be executed by a user or by a computer program. Indeed, for example, the user can be a human, an artificial intelligence, an Al agent or a robot. Advantageously, the user can use a communication module 210 to interact with the system 200.

Preferably, the selection phase can comprise:
• Defining, by at least one user using a communication module, the set of allocations;
• Defining, by the user using the communication module, the set of resources configured to be allocated to the set of allocations;
• Compiling, using the classical processing unit, the historical performance data associated with each allocation in combination with previous allocated resources;
• Determining, using the classical processing unit, an initial allocation weight for each resource of the set of resources;
• Defining, by the user using the communication module, the initial target performance value r*;
• Defining, by the user using the communication module, the target expected risk level value;
• Defining, by the user using the communication device, the adjustment step size;
• Defining, by the user using the communication module, the tolerance value associated with the expected risk level value.

According to an embodiment, in the step of defining the set of allocations, a user interacts with the present invention through the communication module to define the set of allocations that will receive resources. **In** the context of logistics optimization, these allocations can represent the fleet of trucks available for package distribution. For example, the user specifies each truck's characteristics, such as capacity constraints, route assignments, and operational parameters. This definition establishes the fundamental allocation units that will be optimized, creating a comprehensive inventory of available vehicles that can receive package assignments during the resource allocation process.

According to an embodiment, in the step of Defining the set of resources, the user utilizes the communication module to specify the complete set of resources that require allocation across the defined allocation units. **In** the logistics example, these resources correspond to packages awaiting distribution. Each resource is characterized by relevant attributes such as weight, dimensions, delivery priority, destination, and any special handling requirements. This comprehensive resource definition ensures that all items requiring allocation are properly cataloged and available for the optimization algorithm to consider during the allocation process.

According to an embodiment, in the step of compiling historical performance data, the classical processing unit, preferably systematically, compiles and processes historical performance data that captures how each allocation unit has performed when assigned various resources in the past. According to the logistic example, this data aggregation can include metrics such as delivery times, fuel efficiency, route optimization success rates, and cost-effectiveness for different package-truck combinations. The compiled data forms the empirical foundation for predicting future performance and calculating the covariance matrix Σ, which quantifies the relationships and variabilities between different allocation-resource pairings based on observed historical outcomes.

According to an embodiment, in the step of determining initial allocation weights, using the classical processing unit, the present invention establishes initial weight values for each resource within the set of resources. These weights represent preliminary allocation proportions and/or priorities that serve as starting points for the optimization algorithm. The initial weights may be determined through various methods, such as equal distribution, historical average allocations, or heuristic rules based on resource characteristics. These initial values provide the optimization algorithm with a feasible starting configuration from which to iteratively improve toward the optimal solution.

According to an embodiment, in the step of defining the initial target performance value, through the communication module, the user can specify the initial target performance value r*, which represents the desired performance level the system should achieve. This value is configured to serve as a benchmark for the optimization process and could represent metrics such as total delivery time, cost efficiency, or customer satisfaction scores. The target performance value is configured to act as a constraint in the QUBO formulation, guiding the present invention to find resource allocations that meet or exceed this performance threshold, preferably while balancing other optimization objectives.

According to an embodiment, in the step of defining the target expected risk level value, the user employs the communication module to establish the target expected risk level value, which is configured to quantify the acceptable level of uncertainty or variability in the system's performance. This risk metric might represent the probability of delivery delays, cost overruns, or other adverse outcomes, regarding the logistic example. By setting this target, the user defines the risk tolerance for the resource allocation strategy, ensuring that the optimization process not only maximizes performance but also maintains risk within acceptable bounds.

According to an embodiment, in the step of defining the adjustment step size, via the communication module, the user can specify the adjustment step size used during the iterative optimization process. This parameter determines how much the target performance value r* is modified when the calculated expected risk level falls outside the acceptable tolerance range. A larger step size enables faster convergence but may overshoot the optimal solution, while a smaller step size provides more precise convergence at the cost of additional iterations. The appropriate step size is configured to balance computational efficiency with solution accuracy.

According to an embodiment, in the step of defining the tolerance value, the user utilizes the communication module to set the tolerance value associated with the expected risk level value. This tolerance defines an acceptable range around the target expected risk level, establishing when the iterative optimization process has achieved sufficient convergence. For example, the solution is considered valid when the calculated expected risk level falls within the range of [target risk level - tolerance, target risk level + tolerance]. This tolerance parameter prevents excessive iterations while ensuring the final solution meets the risk management requirements within a practical margin of error.

For example, the definition phase may further include defining, by the user using a communication device, a number of simulations. This allows for iterative refinement and exploration of different scenarios. Advantageously, the number of simulations can be adjusted to balance precision and computational resources.

According to an embodiment, the formulation phase is configured to formulate at least one Quadratic Unconstrained Binary Optimization (QUBO) problem using a classical processing unit. This QUBO problem is configured to define the resource selection and weight allocation among the sets of resources and allocations, establishing a system to be optimized.

Advantageously, the QUBO problem is expressed as a minimization function, incorporating the target performance value, resource weights, a covariance matrix derived from the historical performance data, the trade-off parameter, and an expected allocations performance metric. This formulation allows for the quantification of the relationship between resource allocation, performance, and risk.

According to an embodiment, the resource weights can be either binary or continuous. This flexibility allows adaptation to different optimization algorithms. Preferably, the choice between binary and continuous resource weights is dependent on the solver employed. Binary weights may be suitable for solvers that benefit from discrete optimization, while continuous weights may be more appropriate for solvers utilizing gradient-based methods.

According to an embodiment, the iterative phase is configured to be repeated until an expected risk level value falls within a defined tolerance range around a target value.

The iterative phase is configured to use a sophisticated feedback loop that progressively refines the allocation strategy until the expected risk level converges to within an acceptable tolerance of the target value. This phase leverages the unique capabilities of quantum processing units or quantum-inspired algorithm to solve QUBO problems while utilizing quantum-generated random numbers to perform stochastic simulations that assess risk. The iterative nature of this phase allows the present invention to dynamically adjust the target performance parameter based on the calculated risk levels, ensuring that the final solution achieves an optimal balance between performance objectives and risk constraints.

This iterative phase may begin with calculating a solution to the QUBO problem using a quantum processing unit, such as a quantum annealer, or using a quantum emulator, for example, providing an initial target performance value. The classical processing unit then extracts the optimal resource weights distribution based on this initial target performance value, establishing starting conditions for risk level estimation.

Indeed, at the beginning of each iteration, the quantum processing unit or the quantum emulator tackles the formulated QUBO problem using the current target performance value r*. The QUBO formulation min(w^T Σw-λ(r^T w-r*)) encodes the resource allocation problem into a format suitable for quantum annealing or other quantum optimization algorithms. The present invention explores the solution space by leveraging quantum mechanical phenomena such as superposition and tunneling to potentially find global optima more efficiently than classical approaches, as it is well-known by the skilled person in the art. The covariance matrix Σ captures the interdependencies between different allocation-resource combinations based on historical data, while the trade-off parameter λ balances the competing objectives of minimizing performance variance and achieving the target performance level.

According to an embodiment, the quantum processing unit comprises a set of qubits. These qubits can be superconducting qubits, trapped-ions or any other kind of qubits.

According to another embodiment, the quantum processing unit comprises a set of quantum-inspired processing steps. These steps mimic aspects of quantum computation using classical hardware, offering a potential pathway to leverage quantum principles without requiring dedicated quantum hardware.

Advantageously, the quantum processing unit is configured to solve the QUBO problem.

Once a solution to the QUBO problem is generated, the classical processing unit extracts the optimal resource weight distribution from the quantum measurement results. For example, this extraction process can involve interpreting the binary solution vector returned by the quantum processing unit and converting it into meaningful allocation weights that specify how resources should be distributed among the available allocations. These weights serve as the foundation for the subsequent risk assessment, providing the starting conditions that define how resources are allocated across the system for the current iteration.

According to an embodiment, the starting allocation weight for each resource within a defined set of resources can be uniform. This approach ensures equitable distribution among resources at the outset of the optimization process.

According to another embodiment, the initial allocation weight for each resource within a defined set of resources can be assigned randomly. This introduces an element of exploration during the optimization process, potentially leading to solutions that might be missed with a deterministic initial allocation.

According to an embodiment, the risk level estimation process begins by establishing the starting conditions for the system simulation. The system configuration incorporates both the set of allocations (such as trucks in a logistics scenario) and the resource weight distribution derived from the QUBO solution. This configuration represents a complete snapshot of how resources are assigned to allocations, forming the basis for simulating the system's behavior under uncertainty. As discussed hereafter, the estimation process can employ Monte Carlo-style simulations powered by quantum-generated random numbers to explore the range of possible outcomes arising from the proposed allocation strategy.

Then, preferably, quantum-generated random numbers are acquired using the communication module, generated by the quantum random number generation module using at least one quantum process. The quantum random number generation module is configured to generate a stream of random data, which is measured by a measurement module and post-processed by the classical processing unit to convert the stream of random data into quantum-generated random numbers. These numbers are advantageously stored in a storage module.

Indeed, preferably, the quantum random number generation module initiates at least one quantum process configured to produce truly random data streams based on fundamental quantum mechanical uncertainties. Advantageously, the measurement module captures these random data streams, which are then post-processed by the classical processing unit to convert raw quantum measurements into properly formatted random numbers suitable for use in simulations. These quantum-generated random numbers provide superior randomness compared to pseudo-random number generators, ensuring that the risk simulations explore a genuinely representative sample of possible outcomes.

According to an embodiment, the quantum random number generation module comprises a plurality of qubits. Preferably, the step of generating a plurality of quantum-generated random numbers comprises:
a) Putting a set of qubits of the plurality of qubits into a uniform superposition state;
b) Measuring the state of each qubit of the set of qubits using at least one measurement module, the state being measured as a binary value;
c) Post-processing the measurements by converting the binary value into a decimal value using the classical information processing module;
d) Repeating steps a to c until a predetermined number of quantum-generated random numbers is reached.

According to an embodiment, the quantum random number generation module employs a sophisticated hardware architecture based on a plurality of qubits, which serve as the fundamental quantum mechanical systems for generating true randomness. These qubits may be implemented using superconducting circuit technology, where Josephson junctions create artificial atoms with quantized energy levels, or through trapped ion systems where individual atomic ions are confined and manipulated using electromagnetic fields. Superconducting qubits offer advantages in terms of fabrication scalability and fast operation times, typically operating at millikelvin temperatures in dilution refrigerators to maintain quantum coherence. Trapped ion qubits provide exceptional coherence times and high-fidelity operations, using laser cooling and precision control to manipulate quantum states.

For example, the random number generation process can begin by preparing a set of qubits in a uniform superposition state, which represents an equal quantum mechanical probability of measuring each qubit in either the |0〉 or |1〉 state. This preparation typically involves applying Hadamard gates or equivalent single-qubit rotations that transform the initial state (usually |0〉) into the superposition state (|0〉 + |1〉)/√2. The uniform superposition is used to ensure that each qubit has exactly 50% probability of yielding either binary outcome upon measurement, providing the foundation for unbiased random bit generation. The quantum mechanical nature of superposition means that the measurement outcome is fundamentally unpredictable, arising from the collapse of the wave function rather than any deterministic process.

Following superposition preparation, the measurement module can perform projective measurements on each qubit in the computational basis, causing the quantum superposition to collapse into a definite classical state. Each measurement yields a binary value - either 0 or 1 - corresponding to the collapsed quantum state of that qubit. The measurement process is inherently probabilistic due to quantum mechanics' fundamental principles, with the Born rule governing the probability of each outcome. Multiple qubits can be measured in parallel, enabling rapid generation of random bit strings. The measurement apparatus must be carefully calibrated to ensure unbiased readings and minimize systematic errors that could compromise the randomness quality.

The post-processing step can employ the classical information processing module to transform the raw binary measurement results into usable decimal random numbers. This conversion process aggregates multiple binary measurements to construct multi-bit random numbers with the desired numerical range and precision. For example, measuring 32 qubits yields a 32-bit binary string that can be interpreted as an unsigned integer or converted to a floating-point number in the range [0,1]. The conversion algorithm is configured to preserve the statistical properties of the quantum randomness while mapping to the required numerical format for the simulation algorithms.

The quantum random number generation can be configured to operate in an iterative cycle, repeatedly executing the preparation-measurement-conversion sequence until accumulating the predetermined number of random numbers required for the simulation phase. Each iteration produces a batch of random bits equal to the number of qubits measured, allowing efficient generation of large random number datasets. The iterative process can account for quantum system reset times, ensuring that each measurement is independent and that residual quantum correlations from previous measurements do not compromise randomness quality. The system may implement pipelining strategies where one set of qubits is being prepared while another is being measured, maximizing throughput.

According to an embodiment, the simulation step utilizes the classical processing unit and the quantum-generated random numbers to simulate the time evolution of the system's configuration. This involves partitioning the random numbers into subsets based on predetermined criteria related to simulation parameters and system characteristics. Each subset generates a trajectory representing a unique possible outcome over a defined timeframe. This allows for the exploration of multiple potential system states.

Indeed, the simulation step partitions the quantum-generated random numbers into subsets, with each subset driving a unique trajectory of the system's evolution from its starting configuration to various possible final configurations. For example, the first predetermined number of subsets determines how many independent simulation paths are explored, while the second predetermined number defines how many random numbers are used within each trajectory to model the stochastic evolution. Each trajectory represents a possible realization of how the resource allocation might perform under real-world uncertainties, incorporating random variations in factors such as delivery times, demand fluctuations, or operational disruptions, for example.

According to an embodiment, the simulation results are organized into a distribution of final configurations based on predetermined rules, forming a global manifold. A threshold value is then determined within this distribution, separating final configurations into two sets. This determination can involve setting a criterion, calculating a manifold based on the criterion, and defining another manifold to separate the two sets. The threshold value may correspond to an intersection of a defined axis with the separating manifold. This process allows for the identification of a boundary between acceptable and unacceptable outcomes.

Indeed, preferably, after completing all simulation trajectories, the classical processing unit organizes the resulting final configurations into a distribution along predetermined axes, creating a global manifold of n dimensions that captures the range of possible outcomes. This mathematical representation allows for sophisticated analysis of the risk profile associated with the current allocation strategy. The system then constructs higher-dimensional manifolds based on specified criteria, such as performance thresholds or risk metrics, to identify regions of the outcome space that correspond to undesirable results.

The threshold determination step involves sophisticated geometric analysis of the constructed manifolds. By defining a criterion that separates acceptable from unacceptable outcomes, the system calculates a first manifold of n+1 dimensions representing configurations that fail to meet performance standards. The intersection of this higher-dimensional manifold with the original n-dimensional space defines threshold values that demarcate the boundary between satisfactory and unsatisfactory outcomes. The expected risk level is then computed as the average of final configurations that fall beyond these threshold values, providing a quantitative measure of the probability and magnitude of adverse outcomes.

According to an embodiment, the expected risk level value can be calculated as the average of final configurations beyond the determined threshold value. The classical processing unit then checks if this value falls within the defined tolerance range. **If** the value is too high, the target performance value is adjusted downward; if it's too low, the value is adjusted upward. This iterative process continues until a valid solution is found. The advantage of this approach is the ability to dynamically adjust the optimization target based on the observed risk level.

Indeed, preferably, the final step of each iteration involves checking whether the calculated expected risk level falls within the acceptable tolerance range around the target risk level. If the risk level is too high, indicating that the current allocation strategy is too aggressive, the system adjusts the target performance value r* downward by the predefined adjustment step. Conversely, if the risk level is too low, suggesting an overly conservative approach that may be leaving performance gains unrealized, the target performance value is adjusted upward. This adaptive mechanism ensures that the optimization process systematically explores the trade-off between performance and risk until finding an allocation strategy that precisely meets the specified risk tolerance.

Advantageously, the iterative phase continues cycling through these steps, with each iteration bringing the solution closer to the optimal balance between performance objectives and risk constraints. The quantum processing unit's ability to efficiently solve QUBO problems enables rapid exploration of different allocation strategies, while the quantum-generated random numbers ensure thorough risk assessment through high-quality stochastic simulations. The convergence process is guided by the tolerance value, which prevents excessive iterations once the solution achieves sufficient accuracy. This iterative refinement approach allows the present invention to navigate complex, high-dimensional optimization landscapes while maintaining strict control over risk exposure, ultimately delivering resource allocations that are both efficient and robust against uncertainties.

According to an embodiment, the iterative phase can be stopped when the predetermined number of simulations is reached. This provides a defined termination point for the iterative process.

According to an embodiment, the allocation phase is configured to allocate resources based on the extracted optimal resource weights distribution. This step translates the optimized resource allocation strategy into a concrete implementation. The advantage of this phase is the direct application of the optimized solution to the real-world resource allocation problem.

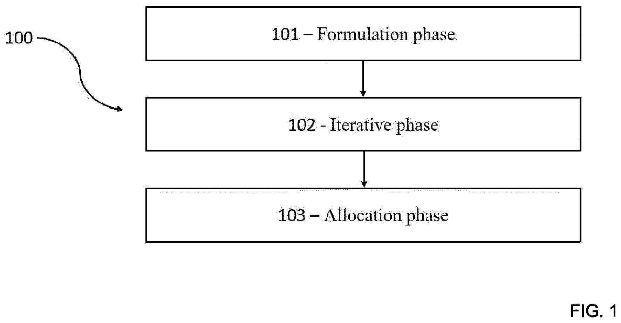

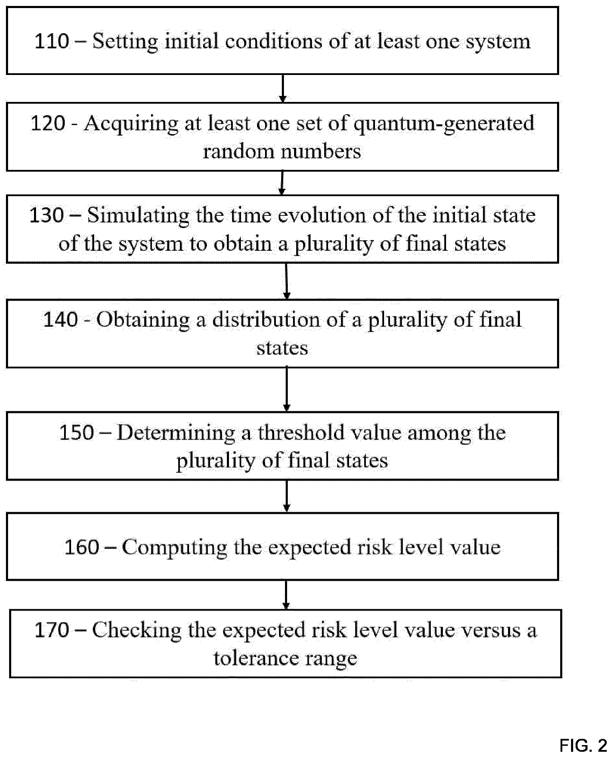

According to an embodiment, and as illustrated by figures 1, 2, 3 and 4, the present invention relates to a computer-implemented method 100 for determining at least one scenario output item regarding the evolution of a predetermined system. As described hereafter, the method 100 is configured to be executed by at least one computing system 200.

Preferably, the method 100 comprises:
• The formulation phase 101 comprising:
   ∘ Formulating, using the classical processing unit 210, a Quadratic Unconstrained Binary Optimization problem for resource selection among the set of resources and weight allocation among the set of allocations the set of resources and the set of allocations defining advantageously a system;
      Preferably, the QUBO problem can be formulated as: *min(w^{T}*Σ*w - λ*(*r^{T}w* - *r**)*),* where:
      **•** *r** = a target performance value
      • *w* = resource weights;
      • *Σ* = covariance matrix of performance of allocations of a set of allocations, advantageously using historical performance data.
      • *λ* = trade-off parameter between the variance of the performance of allocations and the target performance value *r**.
      *• rTw* = expected allocations performance, advantageously using the historical performance data.
• The iterative phase 102 configured to be repeated until an expected risk level value R is comprised between the target expected risk level value r* minus a tolerance value and the target expected risk level value r* plus the tolerance value; Preferably, the iterative phase 102 comprises:
   ∘Calculating a solution by solving, using at least one quantum processing unit 215, the QUBO problem for an initial target performance value ri*; This step can be implemented using well-known techniques; for example, the use of a quantum annealer to solve a QUBO problem is well-known and documented in the scientific literature.
   ∘ Extracting, using the classical processing unit 210, the optimal resource weights distribution among the set of allocations based on the initial target performance value ri* from the calculated solution to get starting initial conditions for the estimation of the expected risk level value R;
   ∘ Estimating the expected risk level value R by:
      ▪ Setting 110, using the classical processing unit 210, starting conditions of at least one system, the system comprising the set of allocations and the resource weight distribution among the allocations resulting from the calculated solution;
      ▪ Acquiring 120 at least one set of quantum-generated random numbers, using the communication module 240, by at least:
         • Generating, using the classical processing unit 210 and at least one quantum random number generation module 220, a plurality of quantum-generated random numbers, by at least:
            ∘ Initiating at least one quantum process using the classical processing unit 210 and the quantum random number generation module 220, said quantum random number generation module comprising at least one output configured to provide a stream of random data generated by the quantum process;
            ∘ Measuring at least one stream of random data from said output of this quantum random number generation module 220 using a measurement module 230;
            ∘ Post-processing, using the classical processing unit 210, the stream of random data to convert the stream of random data into plurality of quantum-generated random numbers;
            ∘Storing the quantum-generated random numbers in at least one storing module 250;
         • Selecting, using the classical processing unit 210, the set of quantum-generated random numbers;
      • Simulating 130, using the classical processing unit 210 and the set of quantum-generated random numbers, the time evolution of the initial configuration of the system to obtain at least one plurality of final configurations of the system, the simulating step comprising at least:
         - Partitioning the set of quantum-generated random numbers into a first predetermined number of subsets of quantum-generated random numbers, each subset of the predetermined number of subsets of quantum-generated random numbers comprising a second predetermined number of quantum-generated random numbers, the first predetermined number being based on a first criterion related to parameters of the simulating step, the second predetermined number being based on a second criterion related to the nature of the system;
         - For each subset of the predetermined number of subsets of quantum-generated random numbers, creating at least one trajectory of the evolution of the configuration of the system from its initial configuration to at least one final configuration over a given timeframe;
      ▪ Obtaining 140, using the classical processing unit 210, a distribution of a plurality of final configurations according to at least one first axis by organizing the plurality of final configurations based on predetermined rules, said distribution defining a global manifold of n dimensions, n being equal or greater than 1;
      ▪ Determining 150, using the classical processing unit 210, at least one threshold value among the plurality of final configurations, said threshold value delimiting a first set of final configurations from a second set of final configurations, the determining step comprising:
         • Setting a given criterion;
         • Calculating a first manifold of n+1 dimension based on said given criterion under the manifold of n dimension, said first manifold corresponding to said first set of final configurations, said first manifold being a part of a global manifold of n+1 dimensions;
         • Defining another manifold of n dimension configured to separate the first manifold of n+1 dimension from a second manifold of n+1 dimensions, the global manifold of n+1 dimensions being formed by at least the first manifold of n+1 dimension and the second manifold of n+1 dimensions;
         • Computing the at least one threshold value on at least the first axis, this threshold value corresponding to at least one intersection of the first axis with the another manifold of n dimensions.
      ▪ Computing, using the classical processing unit 210, the expected risk level value as being the average of final configurations beyond the determined threshold value;
      ▪ Checking, using the classical processing unit 210:
         - If the expected risk level value R is comprised between the target expected risk level value r* minus the tolerance value and the target expected risk level value r* plus the tolerance value, the calculated solution is valid.
         - If the expected risk level value is higher than the expected risk level value r* plus the tolerance value:
            oadjusting the target performance value r* downward using an adjustment step; and
            ∘ repeating the iterative phase until the calculated solution is valid;
         - If the expected risk level value is lower than the expected risk level value r* minus the tolerance value:
            ∘adjusting the target performance value r* upward using an adjustment step; and
            ∘ repeating the iterative phase until the calculated solution is valid;
• The allocation phase 103 comprising:
   ∘Allocating, using the classical processing unit 210, the resources of the set of resources based on the extracted optimal resource weights distribution among the set of allocations.

Therefore, according to an embodiment, the step of estimating the expected risk level value R can begin by setting starting conditions for the system using the classical information processing module 210, which may involve classical information processing techniques. Next, a set of quantum-generated random numbers is acquired by initiating a quantum process using the classical processing unit, also called classical information processing unit, 210 and the quantum random number generation module 220, which may involve quantum information processing techniques. The quantum process generates a stream of random data, which is measured and post-processed to convert it into a usable form. The quantum-generated random numbers are then stored for use in the simulation.

Preferably, the set of quantum-generated random numbers is selected and used to simulate the time evolution of the starting state of the system. This can involve partitioning the set of random numbers into subsets, creating trajectories for each subset, and organizing the final states into a distribution based on predetermined rules. The distribution defines a global manifold of n dimensions, where n is equal or greater than 1.

Then, according to an embodiment, at least one threshold value is determined by setting the given criterion and calculating the first manifold of n+1 dimensions based on this criterion under the manifold of n dimensions. A second manifold is preferably defined to separate the first manifold from a second manifold of n+1 dimensions, forming the global manifold of n+1 dimensions. The threshold value is then advantageously computed as the intersection of the first axis with the second manifold of n dimensions.

The use of quantum random numbers in this context offers several potential advantages over classical methods. Quantum random numbers are truly random and cannot be predicted or manipulated. Additionally, the ability to simulate complex systems using quantum-generated random numbers could lead to more accurate and efficient threshold determination compared to classical methods.

According to an embodiment, the value of 'n' is equal to 1. In this scenario, the plurality of final states is distributed in such a manner that they collectively define a curve. The first manifold, in this context, is shaped to form a surface under this defined curve. Furthermore, the another manifold is configured to define a line, preferably that intersects an axis, providing the threshold value.

According to an embodiment, the value of 'n' can be equal to 2. In this embodiment, the distribution of these final states defines a surface. Advantageously, defining a surface from the distribution of final states allows for a more complex analysis and interpretation of the results obtained during the process. Furthermore, according to an embodiment, the first manifold defines a volume under this defined surface. The choice of using a first manifold in this manner provides a three-dimensional context to the data points represented by the final states. Preferably, the another manifold creates a surface.

According to an embodiment, a quantum process comprises transformations of at least one quantum state through a specific set of operations. Preferably these specific set of operations is carefully chosen and defined to ensure control over the quantum state being transformed. The selection of these operations is useful for achieving the desired outcome in the quantum process. Advantageously, this approach allows for the manipulation and control of quantum states in a controlled manner. Preferably, the specific set of operations is designed to minimize errors and maximize efficiency during the transformation process. This optimization ensures that the quantum state is transformed accurately. It should be noted that the choice of these specific set of operations can depend on various factors, including the type of quantum system being used, the desired outcome of the transformation, and the resources available for implementing the operations. In some embodiments, the transformation process may involve multiple stages, with each stage consisting of a different set of operations designed to bring about the overall transformation of the quantum state. This multi-stage approach can provide greater control over the transformation process and improve the accuracy of the final result. Advantageously, the specific set of operations used in the present invention can be tailored to suit the requirements of different applications or use cases, making it a versatile tool for harnessing the power of quantum mechanics.

According to an embodiment, the present invention can comprise performing a quantum coin flip process to generate the quantum-generated random numbers. Preferably, the present invention can use one qubit. This process simulates the tossing of a fair coin in classical computing, but with the unique properties of quantum mechanics, such as superposition and entanglement, being leveraged.

According to another embodiment, the present invention can comprise using at least one quantum measurement process conducted on an entangled qubit system. The purpose of this quantum process is to obtain random outcomes from the probabilistic results produced.

According to an embodiment, the step of simulating (130) the time evolution of the initial state of the system comprises at least the following sub-steps:
• Defining at least a plurality of parameters; and
• Generating M random paths, each random path representing a unique possible outcome of the quantity's evolution; and
• Calculating average values and/or other statistical measures across all random paths at predetermined points in time over a time horizon T.

Preferably, the sub-step of defining at least a plurality of parameters comprises:
• Setting at least an initial value S0 for at least one quantity being simulated;
• Defining at least one growth rate g, preferably constant, configured to represent the expected tendency of change of the quantity being simulated over time;
• Defining a volatility σ configured to represent the degree of fluctuation in the process;
• Setting the time horizon T for the simulation;
• Defining a number N of steps corresponding to the number of time intervals to calculate the simulation at regular intervals;
• Selecting a number M of simulations corresponding to the number of independent paths to simulate;

Advantageously, this plurality of parameters is configured to mathematically simulate the evolution of the quantity according to the following stochastic differential first equation: dSt = St * (g*dt + *σ* * dWt) where Wt represents random shocks through a Wiener process, and the following second equation: St+Δt = St * exp((g - 0.5σ2) Δt + σΔt1/2Z) configured to discretize the first equation to simulate changes over predetermined time intervals Δt, and where Z is a standard normal random variable, introducing randomness at each time step using the set of quantum-generated random number;

Preferably, the sub-step of generating M random paths comprises, for each generation of a random path:
• Starting from the initial value S0;
• Iterating over N time steps.
• At each step, generating a new random value Z using at least one quantum-generated random number from the set of quantum-generated random numbers,
• Applying the new random value Z to the second equation to calculate an updated value St;
• Recording the updated value St at each interval until reaching the end of the time horizon T.

Therefore, the sub-step of defining at least a plurality of parameters is configured to establish the mathematical foundation for modeling the stochastic evolution of the system. The initial value S0 represents the starting state of the quantity being simulated, which in the context of resource allocation might correspond to initial performance metrics, cost values, or efficiency measures resulting from the QUBO-optimized allocation weights. This baseline value can be used as the launching point for all subsequent simulation trajectories, ensuring that each path begins from the same well-defined initial conditions derived from the quantum optimization solution.

Preferably, the growth rate parameter g captures the expected deterministic trend in the system's evolution over time. This constant rate represents the average tendency of change in the absence of random fluctuations, encoding fundamental assumptions about how the allocated resources are expected to perform under normal conditions. For instance, in a logistics optimization scenario, this might represent the expected improvement in delivery efficiency or cost reduction over time as the system operates under the proposed allocation strategy. The growth rate is configured to provide the drift component of the stochastic process, establishing a baseline trajectory around which random variations will occur.

The volatility parameter σ can play a role in quantifying the degree of uncertainty and fluctuation inherent in the system's behavior. This parameter is configured to capture the magnitude of random variations that can occur around the expected growth trajectory, reflecting real-world uncertainties such as demand variability, operational disruptions, or market fluctuations. A higher volatility value indicates greater uncertainty in outcomes, while lower volatility suggests more predictable behavior. The volatility parameter directly influences the risk profile of the resource allocation strategy, making it a useful factor in assessing whether the allocation meets the specified risk tolerance levels.

The simulation's temporal structure is advantageously defined through the time horizon T and the number of steps N, which together determine the granularity and scope of the analysis. The time horizon establishes the total period over which the system's performance will be evaluated, while the number of steps determines how frequently the system state is updated during the simulation. The resulting time intervals Δt = T/N define the discrete time steps at which random shocks are applied and the system state is recalculated. Additionally, the number of simulations M specifies how many independent evolutionary paths will be generated, ensuring adequate statistical sampling of possible outcomes.

According to an embodiment, the discretization time step (Δt) can be selected based on a trade-off between simulation accuracy and computational cost, potentially employing adaptive refinement techniques. Preferably, the relationship between the total time horizon (T), the number of time steps (N), and the discretization time step (Δt) is explicitly defined as N = T/Δt, allowing for precise control over simulation granularity. Advantageously, the Wiener process (Wt) is generated using a specific algorithm, such as the Ornstein-Uhlenbeck process, to ensure statistical properties are maintained. Advantageously, a post-processing step corrects for any residual bias in the quantum-generated random numbers, ensuring statistical randomness. Preferably, the formula for St+Δt incorporates a derivation that justifies the inclusion of the 0.5σ² term, providing a deeper understanding of the model's underlying assumptions. Advantageously, the choice of stochastic differential equation is justified by its ability to accurately represent the asset's price dynamics under specific market conditions.

Therefore, the mathematical foundation of the simulation rests on a stochastic differential equation dSt = St * (*rdt* + *σ * dWt)* that models the continuous-time evolution of the system state. This equation combines deterministic growth (rdt) with random fluctuations (σ * dWt), where Wt represents the Wiener process that introduces random shocks. The multiplicative nature of this formulation ensures that changes are proportional to the current state value, reflecting realistic scenarios where larger systems experience proportionally larger absolute variations. This continuous-time model provides a theoretically sound basis for capturing the complex dynamics of resource allocation performance under uncertainty.

Preferably, to enable practical computation, the continuous stochastic differential equation is discretized using the formula St+Δt = St * exp((r - 0.5σ²)Δt + σΔt^(1/2)Z). This discretization scheme, based on the geometric Brownian motion solution, ensures that the simulated values remain positive and captures the compounding effects of growth and volatility over time. The adjustment term (r - 0.5σ²) corrects for the convexity effect introduced by the exponential transformation, maintaining the expected growth rate in the discrete implementation. The standard normal random variable Z introduces randomness at each discrete time step, with its values drawn from the quantum-generated random numbers.

The generation of M random paths forms the core of the Monte Carlo simulation approach. Each path preferably begins at the initial value S0 and evolves through N time steps, creating a unique trajectory of the system's possible evolution. At each time step within a path, a new random value Z is drawn from the set of quantum-generated random numbers, ensuring true randomness rather than pseudo-random patterns. This quantum-sourced randomness is particularly valuable for risk assessment, as it avoids the potential biases and correlations that can arise from deterministic random number generators, providing a more reliable exploration of the outcome space.

Within each random path, the simulation iteratively updates the system state using the discretized equation. At each time step, the current state St is multiplied by an exponential factor that combines the deterministic drift, volatility adjustment, and random shock. The quantum-generated random number is transformed into a standard normal variable Z, which scales the volatility component to introduce appropriate randomness. This iterative process continues for all N steps, with each updated value St being recorded to create a complete time series of the system's evolution along that particular random path.

After generating all M random paths, the simulation phase concludes with comprehensive statistical analysis across the ensemble of trajectories. Average values are calculated at each time point to determine expected outcomes, while additional statistical measures such as standard deviations, percentiles, and tail statistics provide insights into the distribution of possible results. These statistical measures are particularly important for risk assessment, as they quantify not just the expected performance but also the likelihood and magnitude of adverse outcomes. The analysis at predetermined points in time allows for understanding how risk evolves over the time horizon, enabling identification of critical periods where the allocation strategy may be particularly vulnerable to poor outcomes.

The simulation results are configured to feed directly into the risk level estimation step, where the distribution of final configurations is analyzed to determine threshold values and compute the expected risk level. The use of quantum-generated random numbers throughout the simulation ensures that the risk assessment is based on genuinely random sampling of possible outcomes, providing confidence in the robustness of the risk metrics. This thorough simulation approach, combining rigorous mathematical modeling with quantum-enhanced randomness, enables accurate assessment of whether the proposed resource allocation strategy achieves the desired balance between performance objectives and risk constraints.

According to an embodiment, the present invention can further comprise:
• computing the average values and/or other statistical measures across all random paths at predetermined points in time over the time horizon T to generate at least one probability distribution and/or at least one plurality of probabilities, each probability of the plurality of probabilities corresponding to a specific scenario; and
• aggregating at least a plurality of results across the different random paths to obtain probabilistic data, said probabilistic data comprising at least one among: a mean, a median, a variance, or probability distributions over time.

Preferably, the statistical analysis processes the ensemble of M random paths generated during the simulation to extract meaningful probabilistic insights about the system's behavior. At each predetermined time point along the time horizon T, the method computes various statistical measures by analyzing the distribution of values across all simulated trajectories. This cross-sectional analysis transforms the raw simulation data into probability distributions that characterize the range and likelihood of different outcomes at specific moments in time. For instance, at the midpoint of the time horizon, the method might analyze how the simulated performance values are distributed across all paths, revealing whether outcomes cluster around the expected value or exhibit significant dispersion that indicates high uncertainty.

Advantageously, the method generates comprehensive probability distributions that capture the full spectrum of possible outcomes at each analysis point. These distributions are constructed by organizing the simulated values from all random paths into histograms or continuous probability density functions, revealing patterns such as skewness, multi-modality, or heavy tails that indicate risk concentrations. Each probability distribution provides a complete picture of outcome likelihoods at a specific time point, enabling sophisticated risk analysis beyond simple point estimates. The method may employ kernel density estimation or other smoothing techniques to convert discrete simulation results into continuous probability distributions that facilitate mathematical analysis and risk metric calculation.

For example, beyond generating continuous distributions, the present invention can be configured to identify and quantify specific scenarios of interest, assigning precise probabilities to each based on the simulation results. These scenarios might represent critical outcomes such as performance falling below minimum thresholds, costs exceeding budgets, or efficiency targets being met. By counting the proportion of random paths that lead to each scenario and normalizing by the total number of simulations M, the method can produce a plurality of probabilities that quantify the likelihood of discrete events. This scenario-based analysis is particularly valuable for decision-making, as it translates complex simulation results into actionable probabilities for specific outcomes that stakeholders care about.

According to an embodiment, the analysis can extend beyond static snapshots to examine how probabilities and distributions evolve over the time horizon T. By computing statistical measures at multiple predetermined points in time, the method can be configured to reveal dynamic patterns such as increasing uncertainty over longer time horizons or convergence toward stable distributions. This temporal analysis might show, for example, that the probability of meeting performance targets remains high in the near term but deteriorates over time due to accumulating uncertainties. Understanding these temporal dynamics is crucial for risk management, as it identifies when interventions might be needed to maintain acceptable risk levels.

According to an embodiment, the aggregating sub-step can begin with computing mean values across all random paths at each time point, producing expected value trajectories that represent the average behavior of the system under the proposed resource allocation. These mean calculations weight each simulated path equally (assuming uniform sampling) and provide central tendency measures that guide expectations about likely outcomes. The temporal evolution of mean values reveals whether the allocation strategy maintains consistent expected performance over time or exhibits systematic drift that might require adjustment. **In** the context of resource allocation, these means might represent expected delivery times, costs, or efficiency metrics that directly inform operational planning.

Preferably, complementing mean calculations, the method can be configured to compute median values and other robust statistics that are less sensitive to extreme outcomes or outliers in the simulation results. The median, representing the 50th percentile of outcomes, provides insight into the typical or most likely result, which may differ significantly from the mean when distributions are skewed. This distinction is particularly important for risk assessment, as a large gap between mean and median values often indicates the presence of low-probability, high-impact events that skew the average. Other percentile calculations, such as quartiles or deciles, further characterize the distribution shape and identify probability thresholds for various outcome levels.

Advantageously, the aggregating sub-step can be configured to calculate variance measures across the random paths to quantify the degree of uncertainty in outcomes at each time point. Variance calculations reveal how widely outcomes might deviate from expected values, providing information about the reliability and predictability of the resource allocation strategy. Time-varying variance patterns might show increasing uncertainty over longer horizons or identify specific time periods where outcomes become particularly unpredictable. Standard deviation, derived from variance, offers an intuitive measure of typical deviation from the mean, while coefficient of variation normalizes this variability relative to the mean value, enabling comparison across different scales or metrics.

For example, the present invention can be configured to aggregate complete probability distributions over time, creating a rich probabilistic dataset that captures the full complexity of possible outcomes. This aggregation might involve computing time-dependent probability density functions, cumulative distribution functions, or discrete probability mass functions for specific outcomes. The resulting probabilistic data structure enables sophisticated queries such as "What is the probability that performance exceeds threshold X at time T?" or "How does the 95th percentile of costs evolve over the planning horizon?" These aggregated distributions can be used to form the foundation for calculating risk metrics such as Value at Risk (VaR) or Conditional Value at Risk (CVaR).

For systems with multiple performance metrics or objectives, this aggregation can be configured to extend to multivariate statistics that capture correlations and dependencies between different outcomes. Joint probability distributions reveal how different aspects of system performance co-vary, while correlation matrices quantify the strength of relationships between metrics at different time points. This multi-dimensional analysis can be useful for understanding systemic risks where poor performance in one area might cascade to affect others, ensuring that the resource allocation strategy is robust against correlated failures or compound risks.

The aggregated probabilistic data provides a comprehensive foundation for risk assessment and decision-making. This data structure can be configured to combine temporal evolution, distributional characteristics, and scenario probabilities into a unified framework that supports sophisticated risk metrics calculation. The expected risk level value R used in the iterative optimization process can be advantageously derived from this probabilistic data by applying threshold-based criteria to identify and quantify adverse outcomes. The richness of the aggregated data ensures that risk assessment captures not just average behaviors but nearly the full spectrum of possibilities, including rare but impactful events that could undermine the resource allocation strategy's effectiveness.

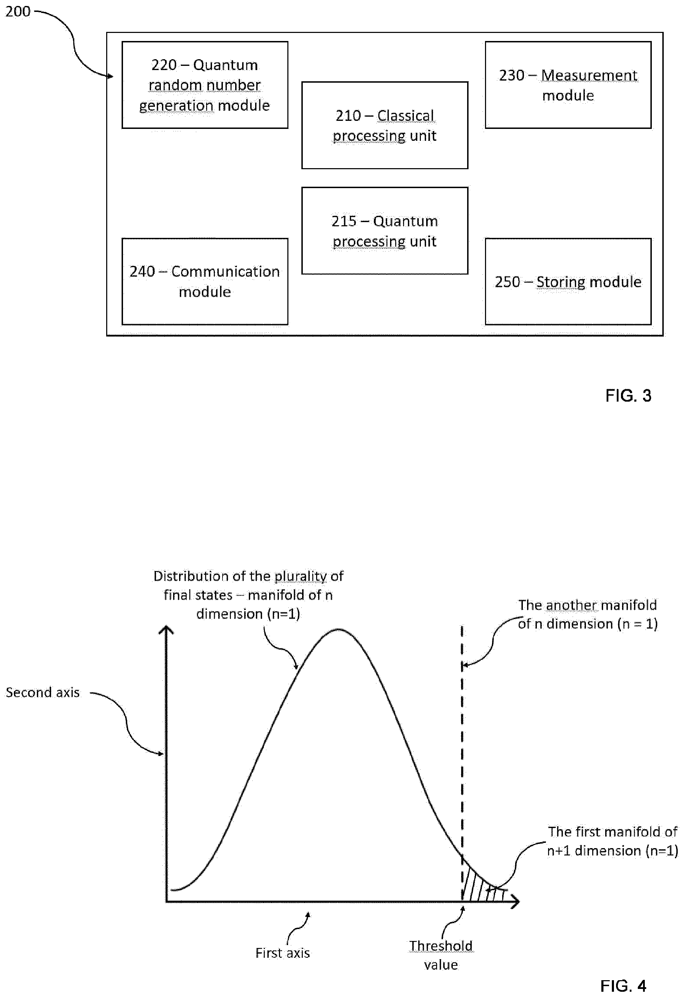

According to an embodiment, and as illustrated by figure 3, the computing system 200 comprises a communication module 240, classical information processing unit 210, quantum processing unit 215, quantum random number generation module 220 module, a measurement module 230 and a storage module 250.

According to an embodiment, the communication module 240 can be configured to:
• allow a user to interact with the system;
• facilitate the transfer of:
   - QUBO problem formulation from the CPU (210) to the QPU.
   - Solutions from the QPU to the CPU (210).
   - Quantum-generated random data from the Measurement Module (230) to the CPU (210).

According to an embodiment, the communication module 240 facilitates interaction between the different modules of the system. Preferably, the module can incorporate a Graphical User Interface (GUI) allowing a user to interact with the system, like in the definition phase, for example.

From a hardware perspective, the communication module 240 can comprise several hardware components responsible for managing data flow and synchronization:
• Data Interfaces: The communication module 240 can incorporate various data interfaces to connect with different hardware components:
   ∘Quantum processing unit interface: A high-speed, low-latency interface (e.g., custom serial link, PCIe, or optical interconnect) that enables the exchange of quantum state information, control signals, and synchronization pulses between the classical processing unit 210 and the quantum processing unit 215.
   ∘Classical data interfaces: Interfaces (e.g., USB, Ethernet, Wi-Fi, or Bluetooth) for connecting external devices such as user interface devices, storage devices, or other classical processing units 210.
• Buffer Memories: The communication module 240 can comprise buffer memories to temporarily store incoming or outgoing data:
   ∘ Input buffers: Temporary storage areas for data received from external sources via the classical data interfaces.
   ∘Output buffers: Temporary storage areas for data destined for external recipients.
• Synchronization Circuits: The communication module 240 can incorporate synchronization circuits to ensure proper timing and coordination between hardware components:
   ∘**Clock distribution:** Circuitry that generates and distributes clock signals to synchronize the operation of various hardware components within the communication module 240 and between the communication module 240, the classical processing unit 210, and the quantum processing unit 215.
   ∘ Trigger generation: Circuits that generate trigger signals to initiate specific actions or processes at precise moments in time, such as starting a quantum algorithm or capturing measurement results.
• Control Logic: The communication module 240 can house control logic responsible for managing data flow, synchronization, and error handling:
   ∘ Data routing: Control circuits that direct incoming data to the appropriate destinations within the communication module 240 or other connected hardware components.
   ∘ Error detection and correction: Circuits that monitor data integrity and implement error detection (e.g., parity checks, cyclic redundancy checks) and correction techniques (e.g., forward error correction) to ensure reliable communication.

Preferably, the hardware components of the communication module 240 work in concert with other modules, such as the classical processing unit 210 and the quantum processing unit 215, to perform various actions.

The communication module 240 can incorporate authentication and authorization protocols. Preferably, these protocols utilize multi-factor authentication to ensure secure access to the system. Advantageously, role-based access control could restrict certain functionalities to authorized personnel, enhancing data security and operational integrity.

According to an embodiment, the classical information processing module 210 is configured to:
a. Formulate a Quadratic Unconstrained Binary Optimization (QUBO) problem for resource selection from a set of resources and weight allocation among a set of allocations;
b. Extract optimal resource weights distribution among the set of allocations based on an initial target performance value from a solution to the QUBO problem, thereby generating starting conditions for estimating an expected risk level value R.
c. Set starting conditions of at least one system comprising the set of allocations and the resource weight distribution resulting from the calculated solution.
d. Post-process streams of random data generated by a Quantum Random Number Generation Module 220 to convert said stream into a plurality of quantum-generated random numbers.
e. Partition a set of quantum-generated random numbers into a first predetermined number of subsets, each subset comprising a second predetermined number of quantum-generated random numbers, the first and second predetermined numbers being based on criteria related to simulation parameters and system characteristics respectively.
f.Simulate time evolution of an initial configuration of the system using the set of quantum-generated random numbers to obtain a plurality of final configurations. The simulation includes creating at least one trajectory for each subset of quantum-generated random numbers, evolving the system from its initial configuration to at least one final configuration over a given timeframe.
g. Organize the plurality of final configurations based on predetermined rules to obtain a distribution defining a global manifold of n dimensions, where n ≥ 1.
h. Determine at least one threshold value among the plurality of final configurations by:
   i. Setting a given criterion;
   ii. Calculating a first manifold of n+1 dimension based on said given criterion under the manifold of n dimension, said first manifold corresponding to a first set of final configurations;
   iii. Defining another manifold of n dimension configured to separate the first manifold of n+1 dimension from a second manifold of n+1 dimensions, the global manifold of n+1 dimensions being formed by at least the first manifold of n+1 dimension and the second manifold of n+1 dimensions;
   iv. Computing the at least one threshold value on at least the first axis, this threshold value corresponding to at least one intersection of the first axis with the another manifold of n dimensions.
i. Compute the expected risk level value R as the average of final configurations beyond the determined threshold value.
j. Compare the expected risk level value R to a target expected risk level value and a tolerance value, and:
   i. If the expected risk level value R is comprised between the target expected risk level value r* minus the tolerance value and the target expected risk level value r* plus the tolerance value, the calculated solution is valid.
   ii. If the expected risk level value is higher than the expected risk level value r* plus the tolerance value:
      - adjust the target performance value r* downward using an adjustment step; and
      - repeat the iterative phase until the calculated solution is valid;
   iii. If the expected risk level value is lower than the expected risk level value r* minus the tolerance value:
      - adjust the target performance value r* upward using an adjustment step; and
      - repeat the iterative phase until the calculated solution is valid.
k. Allocate resources of the set of resources based on the extracted optimal resource weights distribution among the set of allocations upon a valid solution being achieved

From a hardware perspective, the classical processing unit 210, also called central processing unit, is the primary component responsible for executing instructions in a classical computer system. From a hardware perspective, the classical processing unit 210 is an electronic circuit designed to execute instructions and perform data processing tasks.

At its core, a classical processing unit 210 may comprise multiple interconnected units, each serving a specific function:
• Arithmetic logic unit: The arithmetic logic unit performs arithmetic operations (addition, subtraction, multiplication, division) and logical operations (AND, OR, NOT, XOR) on binary data. It receives operands from registers and produces results that are stored back in the registers.
• Control unit: The control unit fetches instructions from memory, decodes the instructions to understand what operation needs to be performed, and then orchestrates the flow of data between the various components of the classical processing unit 210. It also manages the program counter, which keeps track of the address of the next instruction to be executed.
• Registers: Registers are high-speed memory areas within the classical processing unit 210 used for temporary storage of data and addresses. The registers serve as intermediaries between the arithmetic logic unit and other functional units, allowing efficient data transfer and manipulation. Examples include program counter, memory address register, memory buffer register, accumulator, and general-purpose registers.
• Cache: Modern classical processing units employ cache memory to store frequently accessed or recently used data and instructions, enabling faster access than main memory. Cache is organized into levels, with each level having different sizes and speeds, but generally decreasing in size and increasing in speed from higher to lower levels.
• Bus Interface: The classical processing unit 210 communicates with other components, units or modules of the system 200 through a shared bus. The bus interface unit manages data transfer between the classical processing unit 210 and these external components units, or modules.
• **Clock:** A clock signal synchronizes the operations within the classical processing unit 210, ensuring that all components work in harmony to execute instructions in a sequential manner.

According to an embodiment, the quantum random number generation module 220 is configured to cooperate with the classical information processing module 210 to generate the plurality of quantum-generated random numbers.

Preferably, the quantum random number generation module 220 comprises at least one output configured to provide a stream of random data generated by the quantum process, thanks to the measurement module 230.

Advantageously, the quantum random number generation module 220 is configured to:
• Initiate at least one quantum process; and
• Provide a stream of random data generated by the quantum process.

According to an example, from a hardware perspective, the quantum random number generation module 220, as well as the quantum processing unit 215, can comprise several hardware components working together to create, manipulate, and measure qubits states:
• Qubits: One of the fundamental elements of quantum information which can exist in multiple states simultaneously due to the principles of superposition. Qubits can be realized using, for example:
   ∘ Superconducting circuits: Qubits based on superconducting circuits use Josephson junctions and capacitive or inductive elements to create artificial atoms with well-defined energy levels.
   ∘ Trapped ions: In trapped ion qubits, individual atomic ions are confined and manipulated using electromagnetic fields. The internal electronic states of the ions serve as qubit states.
• **Qubit gates:** Qubit gates are the building blocks for implementing quantum algorithms and manipulating qubits' states. The qubit gates can be categorized into:
   ∘ Single-qubit gates: Operations that act on a single qubit, such as Pauli gates (X, Y, Z), Hadamard gate (H), phase shift gates (S, T), and their combinations.
   ∘ Multi-qubit gates: Operations that involve multiple qubits, such as controlled-NOT (CNOT) gate, controlled-Z (CZ) gate, and other entangling gates like the Toffoli or Fredkin gate.
• Control Electronics: The control electronics manage the application of quantum gates and pulses to manipulate qubit states.
• Measurement Electronics: The measurement electronics enable the detection of qubit states, thanks to the measurement module 230.

Preferably, the hardware components of the quantum random number generation module 220 work in concert with other modules, such as the measurement module 230, and the classical processing unit 210, for example, to perform various actions.

According to an embodiment, the measurement module 230 is configured to measure at least one stream of random data from said output of this quantum random number generation module.

According to an embodiment, the storing module is configured to store the quantum-generated random numbers.

The system 200 can be further enhanced by incorporating additional features.

In the present description, the words "data", "piece of information" and "information" can be used for the same purpose, i.e. one data can be or comprise information or a piece of information, and a piece of information can be or comprise a data.

In the present description, one module can comprise several modules, one module can be formed of several modules. For example, the measurement module can comprise several other modules like the bias field generation module, for example.

According to an embodiment, the present invention can be configured to cooperate with at least one input module including one or more user interface devices such as a keyboard, pointer, number pad, or touch screen.

According to an embodiment the classical information processing module comprises at least one processor. In the present description, a processor may be any logic processing unit, such as one or more digital processors, microprocessors, central processing units, graphics processing units, application-specific integrated circuits, programmable gate arrays, programmed logic units, digital signal processors, network processors, and the like.

In the present description, a storage device is at least one non-transitory or tangible storage device. A storage device can, for example, include one or more volatile storage devices, for instance random access memory, and one or more non-volatile storage devices, for instance read only memory, flash memory, magnetic hard disk, optical disk, solid state disk, and the like.

In the present description, a storage device can include or store processor-executable instructions and/or processor-readable data associated with the operation of the present invention and/or with the execution of the method of the present invention. Execution of processor-executable instructions and/or data causes the at least one processor, and/or control modules or units, to carry out various processes and actions.

Classical data can include processor-executable instructions that, when executed by a processor, cause the processor to control, initialize, write to, manipulate, read out, and/or otherwise send data to/from a quantum module.

Classical data can include data used or obtained by the operation of the present invention. Classical data can include data associated with, e.g., created by, referred to, changed by, a processor executing processor-executable instructions, such as, control instructions.

Quantum data or quantum information can comprise one or more qubits. A qubit or quantum bit is a logical building block of a quantum computer comparable to a binary digit in a classical digital computer. A qubit conventionally is a defined physical system having two or more discrete states called computational states or basis states. Basis states logically are analogous to binary states. These states may be labeled |0> and |1>.

As well known by the skilled person in the relevant art (see for example "Quantum entanglement", Ryszard Horodecki et al., Rev. Mod. Phys. 81, 865), an entangled state corresponds to at least two systems, for example two particles, sharing one wave function, and where the determination of a property of one of the particles determines a property of the other particle.

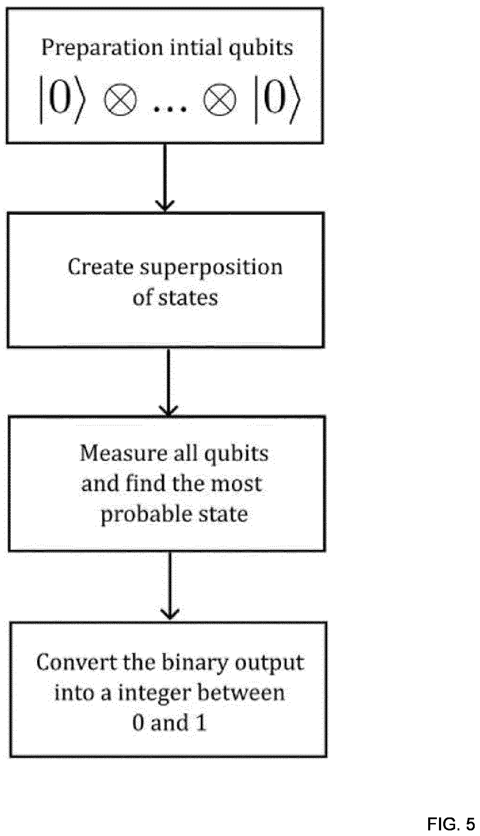

According to an embodiment, and as illustrated by figure 5, the present invention can comprise the following steps:
a. Initially, a plurality of qubits are utilized. Preferably, these qubits can be either superconducting qubits or ions trapped qubits, for example or any kind of qubits. The use of various kinds of qubits provides flexibility and versatility to the present invention.
b. In a subsequent step, quantum operations are performed on the plurality of qubits. These operations can include but are not limited to initialization, manipulation, measurement, and entanglement. The choice of qubit type may influence the specific quantum operations used due to their properties.
c. Advantageously, the present invention comprises the manipulation and measurement of quantum states in a controlled manner, enabling the execution of various quantum algorithms.

According to an embodiment, the present invention can be at least partially implemented in a quantum computing system, which may include additional components such as control electronics, and cooling systems to facilitate the quantum operations. The specific design of the quantum computing system will depend on the chosen qubit type and the intended application, for example.

According to an embodiment, the present invention comprises a step of preparing a set of qubits in a uniform superposition state. This can be achieved by applying appropriate quantum operations to the qubits such that they exist in a linear combination of their possible states, for example. Then, preferably, each qubit from the set is measured using at least one measurement module 230. The measurement process collapses the superposition state of the qubit into one of its basis states, which can be represented as a binary value 0 or 1, for example. The measurements are then post-processed by converting the binary values into decimal values using classical information processing module 210. This conversion is necessary to obtain the final random numbers from the binary data obtained from the measurement process. Advantageously, the method can be repeated until a predetermined number of quantum-generated random numbers is reached. The repetition ensures that a sufficient number of random numbers are generated for various applications, for example.

Advantageously, this method allows for the generation of truly random numbers using quantum mechanics principles. The use of qubits in superposition states and their measurement provides an inherent randomness that cannot be achieved through classical methods alone.

Preferably, the classical information processing module 210 can be a computing system or any other device capable of performing arithmetic operations on binary data. Additionally, the measurement module 230 can be photodetectors, superconducting quantum interference devices (SQUIDs), or any other suitable quantum sensors.

According to an embodiment, the present invention can comprise a specific step for putting the set of qubits from the plurality of qubits into a uniform superposition state, preferably using a set of Hadamard gates. Advantageously, the use of Hadamard gates ensures that each qubit in the set is evenly distributed across the possible states, thereby creating a uniform superposition state. Preferably, the Hadamard gates are applied to each qubit in the set sequentially, with the output of one gate serving as the input for the next. This process is repeated until all qubits have been transformed by a Hadamard gate.

It should be noted that while the use of Hadamard gates is preferred, alternative methods for creating a uniform superposition state may also be employed, provided they achieve the same result. The specific choice of method will depend on various factors such as the number of qubits, the available hardware, and the desired level of control over the superposition state.

In addition, it is important to ensure that the Hadamard gates are properly calibrated and aligned to minimize errors and maintain the integrity of the superposition state. This can be achieved through various techniques such as feedback control, error correction codes, or quantum error detection and correction methods.

According to an embodiment, the measurement module 230 comprises at least one pulse emitter and at least one detector. Preferably, the pulse emitter serves to emit pulses of energy, which can be electromagnetic, magnetic, or any other suitable form, for the purpose of measurement. The detector, on the other hand, is advantageously designed to receive and process signals resulting from the interaction between the emitted pulses and the qubit(s) under measurement.

Preferably, the pulse emitter and the detector are strategically positioned within the measurement module 230 to ensure optimal interaction with the qubit(s) under measurement. This arrangement allows for precise and accurate measurements to be obtained. It is to be noted that the use of a single pulse emitter and detector configuration may suffice, but multiple configurations can also be employed for enhanced measurement capabilities. For instance, multiple pulse emitters can be used to cover a wider area or to provide more detailed measurements, while multiple detectors can help in improving the accuracy and reliability of the measurements by cross-verifying the data obtained from each detector.

According to an embodiment, the simulation process can be carried out using at least one of two distinct approaches: Monte Carlo or Geometric Brownian Motion.

Preferably, the Monte Carlo approach involves using the quantum-generated random numbers to compute the probabilities of various outcomes in a given system. The results of these simulations can be represented graphically as densities of Monte Carlo simulations. For instance, Figure 6 illustrates such a graph, where the dashed line indicates the Value at Risk at the 99% confidence interval for an embodiment of the present invention discussed hereafter.

Advantageously, the Geometric Brownian Motion approach models the random movement of a quantity (such as a financial asset price) over time, using continuous-time stochastic calculus. This method is particularly useful in finance to describe the dynamics of stock prices and other assets that exhibit diffusion processes.

We will now describe several examples of use case of the present invention.

According to a first example, the present invention provides a quantum-enhanced solution to the challenge of inventory optimization in supply chain management, where businesses must maintain optimal stock levels that balance the competing objectives of minimizing holding costs while ensuring adequate product availability to meet customer demand. In this implementation, the set of resources represents different products or SKUs (Stock Keeping Units) in the inventory system, while the set of allocations corresponds to different storage locations, time periods, or demand channels that require inventory allocation. The method leverages quantum computing to solve the complex combinatorial optimization problem of determining how much of each product to stock, while using quantum-generated random numbers to accurately simulate demand uncertainty and assess the risk of both stockouts and excess inventory.

Preferably, the Quadratic Unconstrained Binary Optimization problem is specifically formulated to determine optimal stock levels across the product portfolio. **In** this context, the weight vector w can represent the inventory quantities for each product, while the covariance matrix Σ captures the historical demand variability and correlations between different products. The objective function min(w^T Σw - λ(r^T w - r*)) balances inventory holding costs (represented by the quadratic term w^T Σw) against service level requirements (captured by the linear term r^T w - r*). The target performance value r* represents the desired service level, such as a 95% product availability rate for example, while the trade-off parameter λ controls the relative importance of cost minimization versus service level achievement. The QUBO formulation may encode additional constraints through penalty terms, such as warehouse capacity limits, minimum order quantities, or budget restrictions.

Advantageously, the present invention is configured to compile comprehensive historical demand data for each product, including seasonal patterns, trend information, and demand correlations between related products. This historical data forms the basis for calculating the covariance matrix Σ, which quantifies demand uncertainty and captures important relationships such as substitute products that experience inverse demand patterns or complementary products with correlated demand. The historical performance data also includes information about lead times, supplier reliability, and past stockout events, enabling the system to account for supply chain dynamics beyond simple demand variability. Advanced preprocessing may identify and adjust for special events, promotions, or other factors that create anomalies in historical demand patterns.

Preferably, the risk estimation step can employ Monte Carlo simulation to model the stochastic nature of customer demand and supply chain disruptions. Each simulation trajectory represents a possible future demand scenario, generated using quantum random numbers to ensure true randomness in exploring the uncertainty space. The simulation parameters include the initial inventory levels S0 derived from the QUBO solution, growth rate g representing demand trends or seasonal factors, and volatility σ capturing demand variability. The stochastic differential equation framework models how inventory levels evolve over time as customer orders deplete stock and replenishment orders arrive, with quantum-generated random shocks representing unexpected demand spikes, supply delays, or other disruptions.

The simulation generates a distribution of final inventory configurations, from which the system calculates the expected risk level value for both stockouts and excess inventory. Stockout risk is quantified by identifying scenarios where inventory falls below zero or fails to meet customer demand, while excess inventory risk captures situations where stock levels significantly exceed demand, leading to holding costs, obsolescence, or spoilage. The threshold determination process establishes critical inventory levels that separate acceptable from problematic outcomes, considering factors such as lost sales costs for stockouts and carrying costs for excess inventory. The expected risk level value aggregates these risks into a single metric that guides the optimization process.

Based on the calculated risk levels, the present invention is configured to implement an intelligent adjustment strategy that modifies order quantities to achieve the optimal risk-return trade-off. When the expected risk level value exceeds the target threshold, indicating excessive exposure to either stockouts or surplus inventory, the present invention is configured to reduce order quantities for products contributing most to the risk. This reduction might be proportional to each product's risk contribution or follow more sophisticated rules that consider product priorities and profit margins. Conversely, when risk levels fall below the target, suggesting overly conservative inventory policies that may miss sales opportunities, the present invention is configured to increase order quantities to better meet potential demand while staying within acceptable risk bounds.

The invention extends naturally to complex supply chain networks with multiple echelons (suppliers, warehouses, retail locations) and extensive product portfolios. The QUBO formulation can encode network flow constraints, ensuring that inventory allocations respect the physical structure of the supply chain. Cross-product dependencies captured in the covariance matrix enable the system to optimize substitute and complementary product inventories jointly, recognizing that stockouts in one product may drive demand to alternatives. The quantum processing unit's ability to handle large-scale optimization problems makes it particularly suitable for enterprise-level inventory management with thousands of SKUs across numerous locations.

The iterative process effectively determines dynamic reorder points and order quantities that adapt to changing risk profiles and demand patterns. As the algorithm converges, it identifies inventory policies that trigger replenishment orders at appropriate stock levels, considering lead time uncertainty and demand variability. The quantum-enhanced optimization can discover non-obvious strategies, such as risk pooling across locations or products, that classical approaches might miss. The final solution can be configured to provide not just static inventory targets but dynamic policies that specify how to adjust orders based on current stock levels, recent demand observations, and risk tolerance.

The present invention ensures that inventory optimization respects service level agreements with customers while minimizing associated costs. The target performance value r* can be directly linked to contractual service levels, such as 99% order fulfillment rates or maximum delivery times. The risk assessment can, for example, explicitly calculate the probability of service level agreement violations under different inventory strategies, enabling informed decisions about safety stock levels. The iterative refinement process finds the minimal inventory investment required to meet service commitments with the specified confidence level, eliminating unnecessary buffer stock while maintaining customer satisfaction.

The present invention, i.e. quantum-enhanced inventory optimization system, integrates seamlessly with existing enterprise resource planning and supply chain management systems. The classical processing unit interfaces with databases containing real-time inventory levels, outstanding orders, and demand forecasts, ensuring that optimization decisions reflect current operational reality. The present invention can operate in both strategic planning modes, determining long-term inventory policies, and tactical execution modes, providing daily or weekly order recommendations. The probabilistic outputs enable sophisticated reporting that communicates not just recommended actions but also associated confidence levels and risk assessments to supply chain managers.

The present invention's iterative approach naturally discovers the optimal trade-off between competing cost factors in inventory management. Holding costs, including warehousing, capital costs, and obsolescence risk, are balanced against stockout costs such as lost sales, customer dissatisfaction, and expedited shipping expenses. The quantum optimization explores this trade-off space more efficiently than classical methods, potentially identifying counter-intuitive strategies such as deliberately accepting higher stockout risk for low-margin products to free capital for high-margin items. The risk-adjusted optimization ensures that cost minimization doesn't compromise business objectives or customer relationships.

As the present invention operates over time, it can be configured to continuously refine its understanding of demand patterns and risk factors. New demand observations update the historical data used to calculate covariance matrices, enabling the optimization to adapt to changing market conditions. The present invention can detect when historical patterns no longer predict future demand accurately, triggering re-optimization with updated parameters. This learning capability is particularly valuable in dynamic markets where customer preferences, competitive landscapes, or supply chain structures evolve rapidly, ensuring that inventory strategies remain optimal despite environmental changes.

According to another example, the present invention can be configured to revolutionize smart grid management by applying quantum-enhanced optimization to the challenge of balancing power supply and demand while managing the inherent uncertainties in modern energy systems. In this implementation, the set of resources can represent various power generation sources including renewable (solar, wind), traditional (coal, natural gas), and stable baseload (nuclear, hydroelectric) generators, while the set of allocations can correspond to different grid components such as distribution nodes, transmission lines, and demand centers across the electrical network. The present invention is configured to leverage quantum computing to solve the complex real-time optimization problem of power dispatch while using quantum-generated random numbers to accurately simulate demand fluctuations, renewable generation variability, and grid stability risks.

The Quadratic Unconstrained Binary Optimization problem is specifically formulated to determine optimal energy allocation across the grid's generation and distribution infrastructure. The weight vector w can represent power allocation decisions from each generation source to various demand centers, while the covariance matrix Σ captures the historical variability and correlations between different energy sources and demand patterns. The objective function min(w^T Σw - λ(r^T w - r*)) balances grid stability (represented by minimizing variance through w^T Σw) against performance targets such as cost minimization, emission reduction, or renewable energy utilization (captured by r^T w - r*). The target performance value r* might represent desired metrics such as 30% renewable energy integration or maximum acceptable electricity costs for example, while λ controls the trade-off between grid stability and these performance objectives.

The present invention is configured to comprehensively model the diverse characteristics of different energy sources within the grid. Stable baseload sources like nuclear and hydroelectric provide consistent, predictable power but lack flexibility for rapid adjustments. Renewable sources offer sustainability benefits but introduce significant variability due to weather dependence. Fast-responding sources like natural gas turbines provide grid stability but at higher operational costs and emissions. The QUBO formulation encodes these characteristics through appropriate constraints and objective terms, ensuring that the optimization respects physical limitations such as generator ramp rates, transmission line capacities, and minimum stable generation levels for thermal plants.

The present invention is configured to compile extensive historical data encompassing electricity demand patterns, renewable generation profiles, weather correlations, and grid event logs. This data can reveal patterns such as daily and seasonal demand cycles, correlation between temperature and electricity consumption, and the relationship between weather conditions and renewable output. The covariance matrix Σ derived from this data is configured to capture not only individual source variabilities but also important correlations, such as inverse relationships between wind and solar generation or synchronized demand peaks across neighboring regions, for example. Special attention can be paid to extreme events like heat waves or cold snaps that stress grid capacity and create shortage risks.

The risk estimation phase employs sophisticated Monte Carlo simulations to model the complex stochastic behavior of the energy grid. Each simulation trajectory represents a possible future scenario combining demand fluctuations, renewable generation variability, and potential equipment failures. The simulation parameters include initial grid state S0 based on current generation allocations, growth rate g representing expected demand trends, and volatility σ capturing the combined uncertainty from all sources. The stochastic differential equation framework models how grid balance evolves over time, with quantum-generated random numbers ensuring thorough exploration of possible scenarios including rare but critical events like simultaneous peak demand and low renewable generation.

The simulation generates a comprehensive distribution of grid states, from which the present invention is configured to calculate the expected risk level value specifically focused on energy shortage scenarios. The analysis identifies situations where total generation fails to meet demand, potentially leading to brownouts, blackouts, or the need for expensive emergency power purchases. The threshold determination process establishes critical reserve margins and identifies grid configurations that maintain acceptable shortage probabilities. The risk assessment considers both magnitude and duration of potential shortages, recognizing that brief minor shortfalls might be manageable through demand response programs while sustained deficits could cause significant economic and social disruption.

Based on the calculated risk levels, the present invention is configured to implement an intelligent resource allocation strategy that dynamically adjusts the energy mix to achieve optimal grid stability. When the expected risk level value exceeds acceptable thresholds, indicating high shortage probability, the present invention can be configured to shift allocation toward stable baseload sources like nuclear and hydroelectric power. This shift might involve increasing nuclear plant output, prioritizing hydroelectric dispatch, or committing additional thermal units to provide spinning reserves. The adjustment considers both immediate grid stability needs and longer-term implications such as nuclear fuel management or hydroelectric reservoir levels.

Conversely, when risk levels fall below target values, suggesting excess conservatism in grid operation, the present invention can be configured to increase allocation to renewable sources to optimize for sustainability objectives. This might involve accepting higher grid variability in exchange for reduced emissions and lower long-term costs. The present invention is configured to discover sophisticated strategies for renewable integration, such as geographical diversification to reduce correlation risks, optimal placement of energy storage to buffer variability, or demand response programs that align consumption with renewable generation patterns. The iterative process finds the maximum renewable penetration achievable while maintaining grid reliability standards.

Preferably, the present invention operates in real-time to continuously optimize power dispatch as conditions change throughout the day. The quantum processing unit's speed enables rapid re-optimization as new information arrives, such as updated weather forecasts affecting renewable generation or unexpected demand changes. The present invention can be configured to maintain multiple time horizons simultaneously, optimizing immediate dispatch decisions while considering longer-term implications such as reservoir management or maintenance scheduling. Real-time risk assessment ensures that grid operators have current information about system vulnerability and can take preemptive actions to prevent shortages.

Advantageously, the QUBO formulation extends beyond simple generation-demand matching to optimize power flow through the transmission network. The present invention can be configured to consider transmission line capacities, electrical losses, and network topology to ensure that power can physically flow from generation sources to demand centers. The optimization might discover non-intuitive solutions such as deliberately creating circular power flows to improve system stability or using transmission constraints to naturally limit the impact of renewable variability. Quantum computing's ability to handle the complex interdependencies in meshed transmission networks provides advantages over classical optimal power flow algorithms.

Modern grids increasingly rely on energy storage systems and demand flexibility to manage variability. The present invention can be configured to optimally coordinate these resources within the overall grid optimization. Battery storage might be charged during excess renewable generation and discharged during shortage risks, while pumped hydro provides longer-duration storage for seasonal variations. Demand response programs, where consumers adjust consumption in response to grid conditions, are modeled as virtual generation resources with specific availability and cost characteristics. The quantum optimization discovers optimal coordination strategies that minimize the total system cost while maintaining reliability.

For example, the present invention can be configured to incorporate sophisticated weather modeling to predict renewable generation and demand patterns. Quantum-generated random numbers simulate weather uncertainty, exploring scenarios from typical variations to extreme events. The risk assessment explicitly considers weather-driven correlations, such as widespread wind lulls affecting multiple wind farms simultaneously or cloud cover reducing solar generation across entire regions. The present invention might pre-position reserves based on weather forecasts, increasing stable generation ahead of predicted renewable shortfalls or scheduling maintenance during expected high-generation periods.

Beyond normal operation, the present invention can be configured to enhance grid resilience by explicitly considering contingency scenarios. The Monte Carlo simulation can include random equipment failures, transmission line outages, and extreme weather events. The present invention can be configured to ensures that the grid maintains adequate reserves and redundancy to handle credible contingencies without cascading failures. The risk-based approach quantifies the trade-off between resilience investments and shortage probabilities, helping grid operators make informed decisions about infrastructure upgrades, reserve requirements, and emergency response capabilities.

The iterative phase naturally balances environmental objectives with economic and reliability constraints. The present invention can be configured with carbon emission targets as part of the performance value r*, encouraging renewable utilization while respecting grid stability requirements. The economic optimization considers not just immediate generation costs but also environmental externalities, wear-and-tear on thermal plants from cycling, and long-term fuel price risks. This comprehensive approach ensures that grid operation aligns with broader societal objectives while maintaining essential reliability standards.

Preferably, the present invention can be configured to operate within the complex regulatory and market environment of modern electricity systems. The optimization respects regulatory requirements such as renewable portfolio standards, emission limits, and reliability standards while participating in electricity markets. The present invention can generate optimal bidding strategies for day-ahead and real-time markets, considering both expected profits and risk exposure. The probabilistic outputs support regulatory reporting by quantifying compliance probabilities and identifying potential violation scenarios before they occur.

Advantageously, the present invention can be configured to scale to handle continental-scale electricity grids with thousands of generators, transmission lines, and demand nodes. The quantum processing unit's ability to explore vast solution spaces enables optimization of interconnected regional grids that classical methods must decompose into smaller sub-problems. This holistic optimization discovers synergies between regions, such as using geographical diversity to reduce overall system risk or optimizing inter-regional transmission to share reserves efficiently. The present invention can be configured to maintain computational tractability even as grid complexity increases with growing renewable penetration and distributed energy resources.

As the grid evolves with new technologies and changing demand patterns, the present invention can be configured to continuously update its models and optimization strategies. Machine learning algorithms, for example, can identify changing correlations between weather and renewable generation as technology improves. The present invention can be configured to detect when historical patterns no longer predict future behavior, such as when electric vehicle adoption changes demand profiles or when new storage technologies alter grid dynamics. This adaptive capability ensures that grid optimization remains effective despite the rapid transformation of energy systems toward sustainability and decarbonization goals.

According to another example, the present invention can transform pharmaceutical drug discovery by applying quantum-enhanced optimization to the fundamental challenge of designing molecular structures that maximize therapeutic efficacy while minimizing adverse side effects and toxicity risks. In this implementation, the set of resources can represent various molecular features, functional groups, and structural components that can be incorporated into a drug candidate, while the set of allocations corresponds to different positions within the molecular scaffold, binding sites, or pharmacophores where these features can be placed. The present invention leverages quantum computing to navigate the vast combinatorial space of possible molecular configurations while using quantum-generated random numbers to simulate the inherent variability in biological responses and clinical outcomes.

Preferably, the Quadratic Unconstrained Binary Optimization problem encodes the complex combinatorial challenge of selecting and positioning molecular features to create optimal drug candidates. The weight vector w can represent binary decisions about including specific functional groups, chemical moieties, or structural elements in the molecular design, while the covariance matrix Σ can capture the historical relationships between molecular features and their combined effects on efficacy and toxicity. The objective function min(w^T Σw - λ(r^T w - r*)) balances the minimization of adverse interactions between molecular components (represented by w^T Σw) against achieving target therapeutic efficacy (captured by r^T w - r*). The target performance value r* might represent desired metrics such as binding affinity to the target protein, bioavailability, or therapeutic index, while λ controls the trade-off between safety and efficacy.

Advantageously, the present invention can be configured to maintain a comprehensive library of molecular building blocks, including diverse functional groups (hydroxyl, amino, carboxyl), aromatic systems, heterocycles, and linker elements that can be combined to create drug candidates. Each molecular feature is characterized by its physicochemical properties, such as lipophilicity, hydrogen bonding capacity, molecular weight contribution, and electronic effects. The QUBO formulation can encode chemical feasibility constraints, ensuring that selected combinations result in synthetically accessible and chemically stable molecules. Stereochemical considerations are incorporated, recognizing that different spatial arrangements of the same atoms can have dramatically different biological effects.

Preferably, the present invention can be configured to compile extensive historical data from previous drug discovery efforts, clinical trials, and published literature to establish structure-activity relationships and structure-toxicity relationships. This data reveals how specific molecular features correlate with therapeutic efficacy, off-target effects, and adverse reactions. The covariance matrix Σ derived from this data captures not only individual feature contributions but also synergistic or antagonistic interactions between features. For example, certain functional group combinations might enhance cell permeability while others increase metabolic stability. For example, special attention can be paid to identifying structural alerts associated with known toxicophores or problematic drug-drug interactions.

The risk estimation step can employ sophisticated Monte Carlo simulations to model the variable biological responses expected in clinical trials. Each simulation trajectory can represent a virtual patient or clinical scenario, incorporating biological variability in drug metabolism, genetic polymorphisms affecting drug response, and random variations in disease progression. The simulation parameters can include baseline efficacy S0 predicted from molecular modeling, growth rate g representing drug accumulation or clearance kinetics, and volatility σ capturing inter-patient variability in drug response. Quantum-generated random numbers ensure thorough exploration of the outcome space, including rare but serious adverse events that might only appear in large patient populations.

The simulation generates comprehensive distributions of clinical outcomes, from which the present invention can be configured to calculate the expected risk level value encompassing both toxicity risks and inefficacy probabilities. Toxicity assessment considers multiple endpoints including hepatotoxicity, cardiotoxicity, neurotoxicity, and immunological reactions, each with specific molecular markers and structural correlates. Inefficacy risk quantifies scenarios where the drug fails to achieve therapeutic benefit due to poor bioavailability, rapid metabolism, or insufficient target engagement. The threshold determination process establishes acceptable risk levels based on the therapeutic area, with life-threatening diseases potentially tolerating higher risks than chronic conditions.

Based on calculated risk levels, the present invention can be configured to implement an intelligent molecular modification strategy. When the expected risk level value exceeds acceptable thresholds, indicating high toxicity probability, the present invention can be configured to identify and modify problematic molecular features. This might involve replacing metabolically liable groups with more stable bioisosteres, reducing lipophilicity to decrease accumulation in tissues, or adding polar groups to enhance clearance. The modifications can be guided by medicinal chemistry principles and machine learning models that predict how structural changes affect both efficacy and safety profiles. Each iteration refines the molecular structure while maintaining or improving therapeutic potential.

Conversely, when risk levels fall below targets, suggesting an overly conservative molecular design, the present invention can be configured to explore modifications to enhance potency and efficacy. This might involve adding groups that increase binding affinity through additional interactions with the target protein, incorporating features that improve cell penetration for intracellular targets, or designing prodrug strategies that enhance bioavailability. The present invention can discover non-obvious modifications, such as conformational constraints that pre-organize the molecule for optimal binding while maintaining acceptable safety margins. The iterative process pushes the efficacy envelope while respecting safety constraints.

Drug discovery requires simultaneous optimization of numerous properties beyond simple efficacy and toxicity. The present invention can be configured to handle multiparameter optimization including solubility, permeability, metabolic stability, protein binding, and blood-brain barrier penetration. The QUBO formulation encodes these as additional constraints or objective terms, ensuring that molecular designs meet the complex requirements for successful drugs. The quantum processing unit's ability to handle high-dimensional optimization spaces enables exploration of molecular designs that satisfy multiple competing criteria, discovering solutions that classical methods might miss due to local optima.

Preferably, the present invention explicitly models selectivity requirements, optimizing molecular structures to bind strongly to intended therapeutic targets while avoiding off-target proteins that cause side effects. The covariance matrix incorporates data from broad panel screening assays that test compounds against hundreds of potential off-targets. The present invention might discover selective features such as specific hydrogen bonding patterns that match the intended target but not related proteins, or steric bulk that prevents binding to off-target sites. This selectivity optimization is crucial for developing drugs with wide therapeutic windows and minimal side effects.

For example, the invention integrates sophisticated models for predicting Absorption, Distribution, Metabolism, Excretion, and Toxicity properties based on molecular structure. These models, trained on historical data and continuously updated with new results, guide the optimization toward molecules with favorable pharmacokinetic profiles. The Monte Carlo simulations can incorporate Absorption, Distribution, Metabolism, Excretion, and Toxicity variability, recognizing that properties like metabolic rate can vary significantly between individuals due to genetic factors. The optimization balances Absorption, Distribution, Metabolism, Excretion, and Toxicity properties with efficacy, potentially accepting slightly lower binding affinity for dramatically improved bioavailability or reduced drug-drug interaction potential.

Preferably, the present invention can be configured to support advanced drug design strategies including fragment-based drug discovery and scaffold hopping. **In** fragment mode, the system optimizes combinations of small molecular fragments that bind to different regions of the target protein, with the QUBO formulation encoding spatial constraints for fragment linking. Scaffold hopping explores alternative core structures that maintain key pharmacophore features while potentially avoiding intellectual property issues or improving drug-like properties. The quantum algorithm's ability to explore discrete combinatorial spaces makes it particularly suited for these strategies that require evaluating numerous structural alternatives.

Advantageously, the present invention can be configured to incorporate personalized medicine concepts by modeling how genetic variations affect drug response. The Monte Carlo simulations can be parameterized with population-specific data, exploring how molecular designs perform across different genetic backgrounds. This enables optimization of drugs that maintain efficacy and safety across diverse patient populations or, alternatively, design of precision medicines targeted to specific genetic subtypes. The risk assessment can explicitly consider pharmacogenomic factors, quantifying the probability of adverse reactions in susceptible populations and guiding molecular modifications to improve safety profiles.

Beyond biological properties, the present invention can be configured to consider synthetic accessibility and manufacturing feasibility. The QUBO formulation can include terms that favor molecular designs using readily available starting materials, avoiding complex stereochemistry, and minimizing the number of synthetic steps. Cost functions can be incorporated to balance therapeutic benefit against manufacturing expense. The optimization might discover alternative molecular features that provide similar biological activity through simpler chemical structures, reducing development time and production costs while maintaining therapeutic efficacy.

The probabilistic outputs from the present invention can be configured to support regulatory submissions and clinical trial design. The risk assessments provide quantitative estimates of adverse event probabilities that inform safety monitoring plans and patient exclusion criteria. The present invention can simulate various clinical trial scenarios, optimizing molecular designs for the best probability of successful trials. This might involve balancing efficacy to ensure statistical significance while maintaining safety margins that satisfy regulatory requirements. The uncertainty quantification helps pharmaceutical companies make informed decisions about which candidates to advance through expensive clinical development.

The present invention can be configured to seamlessly integrate with modern drug discovery workflows, providing molecular designs that can be synthesized and tested experimentally. The present invention can be configured to interface with chemical synthesis planning tools, automatically checking that proposed molecules can be made using available chemistry. Results from biological assays feed back into the historical database, continuously improving the accuracy of structure-activity relationships. The iterative nature of the present invention mirrors the design-make-test-analyze cycle of drug discovery, but with quantum-enhanced exploration of chemical space and rigorous risk quantification.

For complex diseases requiring combination therapies, the present invention can be configured to extend to optimize multiple drugs simultaneously. The QUBO formulation can encode drug-drug interactions, ensuring that combined molecules don't interfere with each other's efficacy or create dangerous interactions. The covariance matrix captures correlations between different drugs' effects, enabling optimization of synergistic combinations. The Monte Carlo simulations explore how combinations perform across variable patient responses, identifying robust multi-drug regimens that maintain efficacy even when individual drug responses vary.

As optimized molecules progress through development and clinical trials, the present invention can be configured to continuously learn from accumulated data. Failed compounds provide valuable information about structural features to avoid, while successful drugs validate certain design principles. The present invention can identify when historical models no longer predict outcomes accurately, such as when new biological understanding reveals previously unknown mechanisms. This adaptive capability ensures that the drug discovery optimization remains current with evolving scientific knowledge and clinical experience, improving success rates over time.

Preferably, the present invention's ability to explore vast chemical spaces and escape local optima creates potential for breakthrough discoveries. The present invention might identify non-obvious molecular features or unexpected combinations that provide superior therapeutic profiles. By thoroughly exploring the risk-efficacy trade-off space with quantum-generated randomness ensuring comprehensive sampling, the present invention increases the probability of discovering transformative medicines that significantly advance patient care while maintaining acceptable safety profiles. This systematic, quantitative approach to molecular design represents a paradigm shift from traditional trial-and-error drug discovery toward rational, risk-aware pharmaceutical development.

According to another example, the present invention can revolutionize emergency management by applying quantum-enhanced optimization to the challenge of allocating limited emergency resources during disasters to minimize casualties and maximize life-saving interventions. In this implementation, the set of resources can representsvarious emergency response units including ambulances, fire trucks, search and rescue teams, medical personnel, and specialized equipment, while the set of allocations can correspond to geographical deployment locations, staging areas, hospitals, and incident sites requiring emergency services. The present invention leverages quantum computing to solve the complex real-time optimization problem of resource positioning and dispatch while using quantum-generated random numbers to simulate the inherent uncertainty in disaster evolution, victim locations, and incident severity.

The Quadratic Unconstrained Binary Optimization problem can encode the combinatorial challenge of optimally positioning emergency resources across the disaster-affected region. The weight vector w can represent deployment decisions for each resource type to various locations, while the covariance matrix Σ can capture historical data on incident patterns, response times, and resource utilization correlations. The objective function min(w^T Σw - λ(r^T w - r*)) balances response time minimization (through strategic positioning that reduces variance in coverage) against performance targets such as population coverage or critical infrastructure protection (captured by r^T w - r*). The target performance value r* might represent metrics such as 8-minute response time for 95% of the population or coverage of all critical facilities for example, while λ controls the trade-off between uniform coverage and concentrated deployment in high-risk areas.

Preferably, the present invention can be configured to comprehensively model diverse emergency resource types with their unique capabilities and constraints. Ambulances provide medical transport but require road access, helicopters offer rapid response but have weather limitations, fire trucks handle structural fires but need water supply access, and specialized units like hazmat teams or swift water rescue have specific incident requirements. The QUBO formulation can encode these operational constraints, ensuring deployments respect resource capabilities, crew availability, and equipment limitations. Cross-training and multi-role units are modeled as flexible resources that can respond to various incident types, providing valuable adaptability during complex disasters.

Advantageously, the present invention can be configured to compile extensive historical data from previous disasters, routine emergency responses, and simulation exercises to understand incident patterns and resource effectiveness. This data reveals patterns such as correlation between building types and fire severity, relationship between population density and medical emergencies, or cascade effects where initial incidents trigger secondary emergencies. The covariance matrix Σ derived from this data captures not only individual location risks but also spatial and temporal correlations, such as how industrial accidents might trigger area-wide evacuations or how earthquake aftershocks create continuing resource demands.

The risk estimation step can employ sophisticated Monte Carlo simulations to model the dynamic and uncertain nature of disaster scenarios. Each simulation trajectory represents a possible disaster evolution, incorporating random elements such as incident locations, severity levels, cascade effects, and infrastructure failures. The simulation parameters include initial conditions S0 based on current resource deployments, growth rate g representing incident escalation patterns, and volatility σ capturing the unpredictability of disaster progression. Quantum-generated random numbers ensure thorough exploration of scenarios including rare but catastrophic events like hospital evacuations or communication system failures that dramatically alter resource requirements.

Preferably, the simulation generates comprehensive distributions of emergency service demand and response capabilities, from which the present invention is configured to calculate the expected risk level value of unmet emergency demand. This risk can encompasse various failure modes: delayed response leading to preventable deaths, insufficient resources for simultaneous incidents, or inability to reach victims due to infrastructure damage. The analysis can quantify both the probability and severity of service failures, recognizing that a delayed cardiac response has different consequences than delayed property fire suppression. The threshold determination process establishes critical service levels below which unacceptable loss of life or property damage occurs.

Based on calculated risk levels, the present invention can be configured to implement intelligent resource shifting strategies that adapt to evolving disaster conditions. When the expected risk level value exceeds acceptable thresholds in specific areas, indicating high probability of unmet demand, the present invention can be configured to redirect resources from lower-risk areas or activates reserve units. This might involve relocating ambulances closer to areas with collapsed buildings, pre-positioning fire units near facilities with secondary explosion risks, or establishing mobile command centers in communication dead zones. The reallocation can consider travel times and resource availability to ensure shifts can be executed quickly enough to be effective.

Conversely, when risk levels fall below targets in all critical areas, suggesting concentrated deployment that leaves gaps in coverage, the present invention can be configured to redistribute resources to cover wider regions. This might involve establishing satellite stations in suburban areas, deploying rapid response motorcycles for initial assessment, or positioning resources along major evacuation routes. The present invention can be configured to discover sophisticated deployment patterns that provide overlapping coverage zones, ensuring backup resources are available when primary units are engaged. The iterative process finds the optimal balance between concentrated response capability and comprehensive area coverage.

Advantageously, the present invention is configured to operate continuously during disaster response, updating resource allocations as new incidents are reported and situations evolve. The quantum processing unit's speed enables rapid re-optimization as emergency calls arrive, units complete assignments, or new hazards emerge. The present invention can be configured to maintain situational awareness by integrating real-time data feeds from 911 systems, social media reports, drone surveillance, and field unit status updates. Dynamic optimization ensures resources are always positioned to minimize response times to likely future incidents while maintaining coverage of ongoing operations.

Disaster response typically involves multiple agencies with different command structures, capabilities, and protocols. The QUBO formulation can extend to optimize resource allocation across organizational boundaries, respecting agency-specific constraints while maximizing overall response effectiveness. The present invention might discover that police units can provide initial medical response in certain scenarios or that utility crews should be escorted by law enforcement in unstable areas. The optimization facilitates unified command by providing quantitative justification for resource sharing and mutual aid agreements, overcoming traditional territorial boundaries that can hamper effective disaster response.

The present invention can be configured to explicitly model how infrastructure damage affects emergency response capabilities. Road closures limit ground vehicle access, power outages disable traffic signals and communications, and water system failures impact firefighting capabilities. The Monte Carlo simulations can include infrastructure failure scenarios based on disaster type and intensity, exploring how cascading failures create compound challenges. The present invention can pre-position resources to maintain response capability despite anticipated infrastructure degradation, such as staging helicopters for areas likely to become road-inaccessible or deploying generators to maintain critical communication nodes.

Beyond simple resource allocation, the present invention can be configured to optimize triage protocols and response priorities to maximize life-saving potential. The present invention may model how different response strategies affect outcomes: immediate transport of all victims versus on-scene stabilization, or prioritizing structural fires over vehicle accidents. The QUBO formulation can encode ethical frameworks and medical protocols, ensuring resource allocation aligns with established triage principles while adapting to specific disaster contexts. The present invention might discover that dedicating resources to prevent incident escalation (like containing small fires) provides better overall outcomes than responding only to current emergencies.

Preferably, the present invention can be configured to optimize not just local resources but regional surge capacity through mutual aid agreements. The Monte Carlo simulations can explore scenarios requiring resources beyond local capabilities, quantifying the risk of overwhelming local systems. The present invention can determine pre-positioning of regional assets, trigger points for requesting mutual aid, and staging areas for incoming resources. This might involve identifying optimal locations for temporary hospitals, determining when to request federal disaster assistance, or coordinating with military assets for specialized capabilities like heavy lift or mass casualty evacuation.

Effective disaster response requires robust communication systems that often fail during major incidents. The present invention can be configured to optimize deployment of mobile communication units, satellite systems, and mesh networks to maintain coordination capability. The risk assessment can explicitly consider communication failure scenarios and their impact on response effectiveness. The present invention might prioritize protecting communication infrastructure, deploying redundant systems in critical areas, or establishing runner networks for areas with complete electronic failure. This ensures command and control capabilities persist throughout the disaster response.

Advantageously, the present invention can be configured to incorporate human factors that affect disaster response effectiveness. Panic-driven self-evacuation can clog roads needed for emergency vehicles, while convergent volunteerism can overwhelm incident scenes. The Monte Carlo simulations can model these social dynamics, exploring how public behavior affects resource requirements. The present invention might allocate resources for crowd control, public information dissemination, or family reunification centers that reduce disruptive public actions. Understanding these factors enables more realistic planning that accounts for actual human behavior during disasters.

Each disaster response provides valuable data for improving future preparedness. The present invention can be configured to capturesdetailed logs of resource utilization, response times, and outcome metrics that update the historical database. Machine learning algorithms can identify patterns in resource effectiveness, revealing which deployment strategies worked well and which failed. The present invention can simulate future disasters using updated models, optimizing pre-disaster positioning of resources and identifying infrastructure improvements that would enhance response capability. This continuous learning ensures that each disaster improves preparation for the next.

As climate change alters disaster patterns, the present invention can be configured to adapt to new risk profiles. Increased frequency of extreme weather events, shifting wildfire patterns, and rising flood risks require dynamic updating of risk models. The present invention can be configured to detect when historical patterns no longer predict current risks, triggering re-optimization of resource positioning and capability planning. This might reveal needs for new resource types like high-water vehicles for increased flooding or additional cooling centers for extreme heat events. The adaptive capability ensures emergency management keeps pace with evolving environmental threats.

Unless otherwise specified herein, or unless the context clearly dictates otherwise the term about modifying a numerical quantity means plus or minus ten percent. Unless otherwise specified, or unless the context dictates otherwise, between two numerical values is to be read as between and including the two numerical values.

In the present description, some specific details are included to provide an understanding of various disclosed implementations. The skilled person in the relevant art, however, will recognize that implementations may be practiced without one or more of these specific details, parts of a method, components, materials, etc.

In the present description and appended claims "a", "an", "one", or "another" applied to "embodiment", "example", or "implementation" is used in the sense that a particular referent feature, structure, or characteristic described in connection with the embodiment, example, or implementation is included in at least one embodiment, example, or implementation. Thus, phrases like "in one embodiment", "in an embodiment", or "another embodiment" are not necessarily all referring to the same embodiment. Furthermore, the particular features, structures, or characteristics may be combined in any suitable manner in one or more embodiments, examples, or implementations.

As used in this description and the appended claims, the singular forms of articles, such as "a", "an", and "the", may include plural referents unless the context mandates otherwise. Unless the context requires otherwise, throughout this description and appended claims, the word "comprise" and variations thereof, such as, "comprises" and "comprising" are to be interpreted in an open, inclusive sense, that is, as "including, but not limited to".

Modifications and improvements to the above-described implementations of the present invention may become apparent to those skilled in the art. The foregoing description is intended to be exemplary rather than limiting. The scope of the present invention is, therefore, intended to be limited solely by the scope of the appended claims.

## Claims

1. A computer-implemented method (100) for allocating resources of a set of resources to allocations of a set of allocations according to an expected risk level value R, the method being configured to be implemented by at least one computing system, the method comprising:
• A formulation phase (101):
∘ Formulating, using at least one classical processing unit, a Quadratic Unconstrained Binary Optimization problem for resource selection among the set of resources and weight allocation among the set of allocations the set of resources and the set of allocations defining a system, the Quadratic Unconstrained Binary Optimizationproblem being formulated as: *min(w^{T}*Σ*w* - *λ*(*r^{T} w* - *r**)*)*, where:
• r* = a target performance value
• *w* = resource weights;
• Σ = covariance matrix of performance of allocations of a set of allocations using historical performance data.
• λ = trade-off parameter between the variance of the performance of allocations and the target performance value r*.
• *rTw* = expected allocations performance using the historical performance data.
• An iterative phase (102) configured to be repeated until an expected risk level value R is comprised between the target expected risk level value r* minus a tolerance value and the target expected risk level value r* plus the tolerance value, the iterative phase comprising:
∘Calculating a solution by solving, using at least one quantum processing unit (215), the Quadratic Unconstrained Binary Optimizationproblem for an initial target performance value ri*;
∘ Extracting, using the classical processing unit (210), the optimal resource weights distribution among the set of allocations based on the **initial** target performance value ri* from the calculated solution to get starting initial conditions for the estimation of the expected risk level value R;
∘ Estimating the expected risk level value R by:
▪ Setting (110), using the classical processing unit (210), starting conditions of at least one system, the system comprising the set of allocations and the resource weight distribution among the allocations resulting from the calculated solution;
▪ Acquiring (120) at least one set of quantum-generated random numbers, using the communication module (240), by at least:
• Generating, using the classical processing unit (210) and at least one quantum random number generation module (220), a plurality of quantum-generated random numbers, by at least:
∘ Initiating at least one quantum process using the classical processing unit (210) and the quantum random number generation module (220), said quantum random number generation module comprising at least one output configured to provide a stream of random data generated by the quantum process;
∘ Measuring at least one stream of random data from said output of this quantum random number generation module (220) using a measurement module (230);
∘ Post-processing, using the classical processing unit (210), the stream of random data to convert the stream of random data into plurality of quantum-generated random numbers;
∘Storing the quantum-generated random numbers in at least one storing module (250);
• Selecting, using the classical processing unit (210), the set of quantum-generated random numbers;
▪ Simulating (130), using the classical processing unit (210) and the set of quantum-generated random numbers, the time evolution of the initial configuration of the system to obtain at least one plurality of final configurations of the system, the simulating step comprising at least:
• Partitioning the set of quantum-generated random numbers into a first predetermined number of subsets of quantum-generated random numbers, each subset of the predetermined number of subsets of quantum-generated random numbers comprising a second predetermined number of quantum-generated random numbers, the first predetermined number being based on a first criterion related to parameters of the simulating step, the second predetermined number being based on a second criterion related to the nature of the system;
• For each subset of the predetermined number of subsets of quantum-generated random numbers, creating at least one trajectory of the evolution of the configuration of the system from its initial configuration to at least one final configuration over a given timeframe;
▪ Obtaining (140), using the classical processing unit (210), a distribution of a plurality of final configurations according to at least one first axis by organizing the plurality of final configurations based on predetermined rules, said distribution defining a global manifold of n dimensions, n being equal or greater than 1;
▪ Determining (150), using the classical processing unit (210), at least one threshold value among the plurality of final configurations, said threshold value delimiting a first set of final configurations from a second set of final configurations, the determining step comprising:
• Setting a given criterion;
• Calculating a first manifold of n+1 dimension based on said given criterion under the manifold of n dimension, said first manifold corresponding to said first set of final **configurations,** said first manifold being a part of a global manifold of n+1 dimensions;
• Defining another manifold of n dimension configured to separate the first manifold of n+1 dimension from a second manifold of n+1 dimensions, the global manifold of n+1 dimensions being formed by at least the first manifold of n+1 dimension and the second manifold of n+1 dimensions;
• Computing the at least one threshold value on at least the first axis, this threshold value corresponding to at least one intersection of the first axis with the another manifold of n dimensions.
▪ Computing (160), using the classical processing unit, the expected risk level value as being the average of final configurations beyond the determined threshold value;
▪ Checking (170), using the classical processing unit:
• If the expected risk level value R is comprised between the target expected risk level value r* minus the tolerance value and the target expected risk level value r* plus the tolerance value, the calculated solution is valid.
• If the expected risk level value is higher than the expected risk level value r* plus the tolerance value:
oadjusting the target performance value r* downward using an adjustment step; and
∘ repeating the iterative phase until the calculated solution is valid;
• If the expected risk level value is lower than the expected risk level value r* minus the tolerance value:
oadjusting the target performance value r* upward using an adjustment step; and
∘ repeating the iterative phase until the calculated solution is valid;
• An allocation phase (103) comprising:
∘Allocating, using the classical processing unit (210), the resources of the set of resources based on the extracted optimal resource weights distribution among the set of allocations.

2. The method (100) according to the previous claim further comprising, before the formulation phase, a definition phase configured to determine a set of parameters, the determination phase comprising:
∘ Defining, by at least one user using a communication module, the set of allocations;
∘ Defining, by the user using the communication module, the set of resources configured to be allocated to the set of allocations;
oCompiling, using the classical processing unit, the historical performance data associated with each allocation in combination with previous allocated resources;
∘ Determining, using the classical processing unit, an initial allocation weight for each resource of the set of resources;
∘ Defining, by the user using the communication module, the initial target performance value r*;
∘ Defining, by the user using the communication module, the target expected risk level value;
∘ Defining, by the user using the communication device, the adjustment step size;
∘ Defining, by the user using the communication module, the tolerance value associated with the expected risk level value.

3. The method (100) according to any of the previous claims wherein n is equal to 1, and wherein the distribution of the plurality of final states defines a curve and wherein the first manifold defines a surface under said curve, and wherein the another manifold defines a line.

4. The method (100) according to any of the previous claims 1 and 2 wherein n is equal to 2, and wherein the distribution of the plurality of final states defines a surface and wherein the first manifold defines a volume under said surface, and wherein the another manifold defines a surface.

5. The method (100) according to any one of the previous claims wherein the step of simulating (130) the time evolution of the initial state of the system comprises at least the following sub-steps:
a. Defining at least a plurality of parameters by:
i. Setting at least an initial value S0 for at least one quantity being simulated;
ii. Defining at least one growth rate r, preferably constant, configured to represent the expected tendency of change of the quantity being simulated over time;
iii. Defining a volatility σ configured to represent the degree of fluctuation in the process;
iv. Setting a time horizon T for the simulation;
v. Defining a number N of steps corresponding to the number of time intervals to calculate the simulation at regular intervals;
vi. Selecting a number M of simulations corresponding to the number of independent paths to simulate;
This plurality of parameters are configured to mathematically simulate the evolution of the quantity according to the following stochastic differential first equation: dSt = St * (r*dt + σ * dWt) where Wt represents random shocks through a Wiener process, and the following second equation: St+Δt = St * exp((r - 0.5*σ*2) Δt + *σ*Δt1/2Z) configured to discretize the first equation to simulate changes over predetermined time intervals Δt, and where Z is a standard normal random variable, introducing randomness at each time step using the set of quantum-generated random number;
b. Generating M Random Paths, each random path representing a unique possible outcome of the quantity's evolution, and for each generation of a random path:
i. Starting from the initial value S0;
ii. Iterating over N time steps.
iii. At each step, generating a new random value Z using at least one quantum-generated random number form the set of quantum-generated random numbers,
iv. Applying the new random value Z to the second equation to calculate an updated value St;
v. Recording the updated value St at each interval until reaching the end of the time horizon T.
c. Calculating average values and/or other statistical measures across all random paths at predetermined points in time over the time horizon T.

6. The method (100) according to the previous claim comprising:
a. computing the average values and/or other statistical measures across all random paths at predetermined points in time over the time horizon T to generate at least one probability distribution and/or at least one plurality of probabilities, each probability of the plurality of probabilities corresponding to a specific scenario; and
b. aggregating at least a plurality of results across the different random paths to obtain probabilistic data, said probabilistic data comprising at least one among: a mean, a median, a variance, or probability distributions over time.

7. The method (100) according to any of the previous claims wherein the quantum process comprises a transformation of at least one quantum state through a specific set of operations, and wherein the quantum process is taken among at least:
a. Quantum coin flip process using at least one qubit;
b. Quantum measurement process on an entangled qubit system.

8. The method (100) according to any of the previous claims wherein the quantum random number generation module (220) comprises a plurality of qubits, the plurality of qubits comprising at least one of superconducting qubits or ions trapped qubits, and wherein the step of generating a plurality of quantum-generated random numbers comprises:
a. Putting a set of qubits of the plurality of qubits into a uniform superposition state;
b. Measuring the state of each qubit of the set of qubits using at least one measurement module (230), the state being measured as a binary value;
c. Post-processing the measurements by converting the binary value into a decimal value using the classical information processing module (210);
d. Repeating steps a to c until a predetermined number of quantum-generated random numbers is reached.

9. The method (100) according to any of the previous claims, wherein the set of resources represents different products in an inventory system, and the set of allocations corresponds to different storage locations, time periods, or demand channels requiring inventory allocation, the method further comprising:
• configuring the weight vector w to represent inventory quantities for each product;
• configuring the covariance matrix Σ to capture historical demand variability and correlations between different products;
• setting the target performance value r* to represent a desired service level;
• modeling demand uncertainty through simulations using quantum-generated random numbers to simulate customer demand patterns and supply chain disruptions;
• calculating the expected risk level value R as a composite metric encompassing both stockout risk and excess inventory risk;
• determining threshold values that separate acceptable inventory levels from problematic outcomes considering lost sales costs for stockouts and carrying costs for excess inventory; and
• implementing dynamic reorder points and order quantities that adapt to changing risk profiles and demand patterns based on the calculated solution.

10. The method (100) according to any of the previous claims 1 to 9, wherein the set of resources represents various power generation sources including renewable, traditional, and baseload generators, and the set of allocations corresponds to grid components including distribution nodes, transmission lines, and demand centers, the method further comprising:
• configuring the weight vector w to represent power allocation decisions from each generation source to various demand centers;
• configuring the covariance matrix Σ to capture historical variability and correlations between different energy sources and demand patterns;
• setting the target performance value r* to represent desired metrics selected from renewable energy integration targets or maximum acceptable electricity costs;
• modeling grid variability through the Monte Carlo simulation using quantum-generated random numbers to simulate demand fluctuations, renewable generation variability, and equipment failures;
• calculating the expected risk level value R specifically focused on energy shortage scenarios that could lead to brownouts or blackouts;
• determining threshold values that establish critical reserve margins and identify grid configurations maintaining acceptable shortage probabilities; and
• implementing dynamic resource allocation that shifts between stable baseload sources and renewable sources based on calculated risk levels to optimize grid stability while meeting sustainability objectives.

11. The method (100) according to any of the previous claims 1 to 10, wherein the set of resources represents molecular features, functional groups, and structural components for drug candidates, and the set of allocations corresponds to different positions within molecular scaffolds, binding sites, or pharmacophores, the method further comprising:
• configuring the weight vector w to represent binary decisions about including specific functional groups, chemical moieties, or structural elements in molecular design;
• configuring the covariance matrix Σ to capture historical relationships between molecular features and their combined effects on efficacy and toxicity;
• setting the target performance value r* to represent desired therapeutic metrics selected from binding affinity, bioavailability, or therapeutic index;
• modeling biological response variability through the Monte Carlo simulation using quantum-generated random numbers to simulate inter-patient variability in drug response and genetic polymorphisms;
• calculating the expected risk level value R encompassing both toxicity risks across multiple endpoints and inefficacy probabilities;
• determining threshold values that establish acceptable risk levels based on therapeutic area requirements; and
• implementing molecular modification strategies that identify and modify problematic molecular features when risk exceeds thresholds or enhance potency when risk levels are below targets while maintaining chemical feasibility constraints.

12. The method according to any of the previous claims 1 to 8, wherein the set of resources represents emergency response units including ambulances, fire trucks, search and rescue teams, and medical personnel, and the set of allocations corresponds to geographical deployment locations, staging areas, hospitals, and incident sites, the method further comprising:
• configuring the weight vector w to represent deployment decisions for each resource type to various emergency response locations;
• configuring the covariance matrix Σ to capture historical data on incident patterns, response times, and resource utilization correlations;
• setting the target performance value r* to represent emergency response metrics selected from population coverage targets or critical infrastructure protection requirements;
• modeling disaster uncertainty through the Monte Carlo simulation using quantum-generated random numbers to simulate incident locations, severity levels, cascade effects, and infrastructure failures;
• calculating the expected risk level value R of unmet emergency demand encompassing delayed response scenarios and insufficient resource availability;
• determining threshold values that establish critical service levels below which unacceptable loss of life or property damage occurs; and
• implementing intelligent resource shifting strategies that redirect resources from lower-risk areas to high-probability demand areas or redistribute resources to provide comprehensive coverage based on evolving disaster conditions and real-time incident data.

13. A computing system (200) for allocating resources based on expected risk level, the computing system being configured to implement the method (100) according to any of the previous claims, the computing system (200) comprising:
• At least one classical processing unit (210) configured to:
• Formulate a Quadratic Unconstrained Binary Optimization problem for resource selection from a set of resources and weight allocation among a set of allocations;
• Extract optimal resource weights distribution among the set of allocations based on an initial target performance value from a solution to the Quadratic Unconstrained Binary Optimization problem, thereby generating starting conditions for estimating an expected risk level value R.
• Set starting conditions of at least one system comprising the set of allocations and the resource weight distribution resulting from the calculated solution.
• Post-process streams of random data generated by a Quantum Random Number Generation Module (220) to convert said stream into a plurality of quantum-generated random numbers.
• Partition a set of quantum-generated random numbers into a first predetermined number of subsets, each subset comprising a second predetermined number of quantum-generated random numbers, the first and second predetermined numbers being based on criteria related to simulation parameters and system characteristics respectively.
• Simulate time evolution of an initial configuration of the system using the set of quantum-generated random numbers to obtain a plurality of final configurations. The simulation includes creating at least one trajectory for each subset of quantum-generated random numbers, evolving the system from its initial configuration to at least one final configuration over a given timeframe.
• Organize the plurality of final configurations based on predetermined rules to obtain a distribution defining a global manifold of n dimensions, where n ≥ 1.
• Determine at least one threshold value among the plurality of final configurations by:
• Setting a given criterion;
• Calculating a first manifold of n+1 dimension based on said given criterion under the manifold of n dimension, said first manifold corresponding to a first set of final configurations;
• Defining another manifold of n dimension configured to separate the first manifold of n+1 dimension from a second manifold of n+1 dimensions, the global manifold of n+1 dimensions being formed by at least the first manifold of n+1 dimension and the second manifold of n+1 dimensions;
• Computing the at least one threshold value on at least the first axis, this threshold value corresponding to at least one intersection of the first axis with the another manifold of n dimensions.
• Compute the expected risk level value R as the average of final configurations beyond the determined threshold value.
• Compare the expected risk level value R to a target expected risk level value and a tolerance value, and:
• If the expected risk level value R is comprised between the target expected risk level value r* minus the tolerance value and the target expected risk level value r* plus the tolerance value, the calculated solution is valid.
• If the expected risk level value is higher than the expected risk level value r* plus the tolerance value:
• adjust the target performance value r* downward using an adjustment step; and
• repeat the iterative phase until the calculated solution is valid;
• If the expected risk level value is lower than the expected risk level value r* minus the tolerance value:
• adjust the target performance value r* upward using an adjustment step; and
• repeat the iterative phase until the calculated solution is valid.
• Allocate resources of the set of resources based on the extracted optimal resource weights distribution among the set of allocations upon a valid solution being achieved.
• At least one quantum processing unit (215) configured to solve the QUBO problem for an initial target performance value.
• At least one quantum random number generation module (220) comprising at least one output configured to provide a stream of random data generated by a quantum process.
• At least one measurement module (230) coupled to the quantum random number generation module (220), configured to measure at least one stream of random data from said output.

14. A computer product program for allocating resources based on expected risk level which, when executed by at least one computing system (200) according to the previous claim, executes the method (100) according to any one of claims 1 to 12.

15. A non-transitory computer readable medium comprising at least one computer program product according to the previous claim.
